(19) Europäisches Patentamt / European Patent Office / Office européen des brevets

(11) **EP 4 539 250 A1**

(12) **EUROPEAN PATENT APPLICATION**
published in accordance with Art. 153(4) EPC

(43) Date of publication:
**16.04.2025 Bulletin 2025/16**

(21) Application number: **23839814.3**

(22) Date of filing: **14.06.2023**

(51) International Patent Classification (IPC):
**H01Q 1/38** (2006.01)    **H01Q 1/24** (2006.01)
**H04M 1/02** (2006.01)    **H01Q 9/04** (2006.01)

(52) Cooperative Patent Classification (CPC):
**H01Q 1/24; H01Q 1/38; H01Q 9/04; H04M 1/02**

(86) International application number:
**PCT/KR2023/008195**

(87) International publication number:
**WO 2024/014720 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.07.2022 KR 20220086180
29.08.2022 KR 20220108345**

(71) Applicant: **Samsung Electronics Co., Ltd.
Suwon-si, Gyeonggi-do 16677 (KR)**

(72) Inventors:
• **KIM, Byungjoon
Suwon-si Gyeonggi-do 16677 (KR)**

• **PARK, Heejin
Suwon-si Gyeonggi-do 16677 (KR)**
• **MOON, Kyunghoon
Suwon-si Gyeonggi-do 16677 (KR)**
• **KIM, Sungsoo
Suwon-si Gyeonggi-do 16677 (KR)**
• **KIM, Yongyoun
Suwon-si Gyeonggi-do 16677 (KR)**
• **LIM, Youngjoon
Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54) **ELECTRONIC DEVICE COMPRISING ANTENNA**

(57) An electronic device according to various embodiments of the present disclosure may comprise: a first housing forming at least a part of the side surface of the electronic device; a first conductive structure formed on the inside of a first opening; and an antenna module including a printed circuit board (PCB), a plurality of conductive patches arranged in the PCB so as to face the first opening, and a wireless communication circuit. The first opening can be formed in the first housing. A first electric path can be formed in the first conductive structure spaced apart from the plurality of conductive patches, according to the wireless communication circuit supplying power to the plurality of conductive patches. An RF signal formed on the basis of the first electric path can be emitted to the outside of the electronic device.

FIG.9

EP 4 539 250 A1

## Description

### [Technical Field]

Various embodiments of the disclosure relate to an electronic device including an antenna.

### [Background Art]

Thanks to the development of communication devices, electronic devices may include antenna modules capable of fast, high-capacity transmission to produce and transmit various contents, to connect various objects to the Internet (for example, Internet of things (IoT)), or to connect communication among various sensors for autonomous driving. For example, an electronic device may include an antenna module (hereinafter, an mmWave antenna module) to radiate mmWave signals.

An mm Wave antenna module may be disposed adjacent to an outer edge of a housing which forms a side surface of an electronic device. For example, an electronic device may include two mmWave antenna modules disposed adj acent to a side surface of the electronic device to form beams toward the side surface. In another example, an electronic device may include one mmWave antenna module disposed adjacent to a side surface of the electronic device to form beams toward the side surface, and one mmWave antenna module disposed adjacent to a rear surface cover to form beams toward the rear surface.

### [Disclosure of Invention]

### [Technical Problem]

As electronic devices support various frequency bands, they may have insufficient antenna mounting spaces. In addition, an mmWave antenna module should be disposed adjacent to a wireless communication circuit (for example, a radio frequency integrated circuit (RFIC)), which is intended to minimize the loss of signals, since the mmWave antenna module transmits and/or receives signals of relatively high frequency bands (for example, FR2 band). Due to the insufficient antenna mounting space and the constraint on arrangement of the mm Wave antenna module, it may be difficult to mount an additional mmWave antenna module.

Meanwhile, when a plurality of mmWave antenna modules are not mounted in an electronic device, it may be difficult to obtain an antenna coverage sufficient to perform communication according to characteristics of high frequency bands (for example, FR2 band) supported by mmWave antenna modules.

An electronic device according to various embodiments of the disclosure may include conductive structures which include a plurality of protrusions formed in a plurality of openings formed on a conductive portion of a housing.

### [Solution to Problem]

According to various embodiments of the disclosure, an electronic device may include: a first housing which forms at least a part of a side surface of the electronic device; a first conductive structure which is formed inside the first opening; and an antenna module which includes a printed circuit board (PCB), a plurality of conductive patches disposed on the PCB to face the first opening, and a wireless communication circuit. The first opening may be formed in the first housing. As the wireless communication circuit feeds power to the plurality of conductive patches, a first electrical path may be formed in the first conductive structure which is spaced apart from the plurality of conductive patches. A radio frequency (RF) signal generated based on the first electrical path may be radiated to an outside of the electronic device.

According to various embodiments of the disclosure, an electronic device may include a first housing which forms at least a part of a side surface of the electronic device, conductive structures which are formed on inner surfaces of the plurality of openings, a PCB, a plurality of conductive patches disposed on the PCB to face the plurality of openings, and a wireless communication circuit. The plurality of openings may be formed in the first housing. As the wireless communication circuit feeds power to the plurality of conductive patches, electrical paths may be formed in the plurality of conductive structures which are spaced apart from the plurality of conductive patches. A radio frequency (RF) signal generated based on the electrical paths may be radiated.

### [Description of Drawings]

FIG. 1 is a view illustrating an electronic device in a network environment according to an embodiment;

FIG. 2 is a view illustrating a front surface and a rear surface of an electronic device in an unfolded state according to an embodiment;

FIG. 3 is a cross-sectional view illustrating a first antenna module according to an embodiment;

FIG. 4 is a view illustrating a first antenna module according to an embodiment;

FIG. 5 is a view for illustrating a position of an antenna module disposed in an electronic device according to an embodiment;

FIG. 6A is a view for illustrating a first conductive portion to which a first antenna module is disposed adjacent, and a recess formed in the first conductive portion according to an embodiment;

FIG. 6B is a view for illustrating a shape of a first side surface from which a dielectric material disposed in the recess is removed according to an embodiment;

FIG. 6C is a view for illustrating positions of first conductive patches of the first antenna module;

FIG. 7 is a view for illustrating conductive structures formed in a plurality of openings according to an embodiment;

FIG. 8 is a cross-sectional view taken on line A-A' of FIG. 6A, illustrating the electronic device according to an embodiment;

FIG. 9 is a view illustrating a radiation pattern when a conductive structure is not formed in each of a plurality of openings, and a radiation pattern when conductive structures are formed in a plurality of openings, respectively, according to an embodiment;

FIG. 10 is a view for illustrating conductive structures formed in a plurality of openings according to an embodiment;

FIG. 11 is a view for illustrating conductive structures formed in a plurality of openings according to an embodiment;

FIG. 12 is a view for illustrating conductive structures formed in a plurality of openings according to an embodiment;

FIG. 13 is a view for illustrating conductive structures formed in a plurality of openings according to an embodiment;

FIG. 14 is a view for illustrating conductive structures formed in a plurality of openings according to an embodiment;

FIG. 15 is a view for illustrating conductive structures formed in a plurality of openings according to an embodiment;

FIG. 16 is a view for comparing a radiation pattern when a conductive structure is not formed in the first opening, a radiation pattern when a conductive structure including a cuboid protrusion is formed in the first opening, and a radiation pattern when a conductive structure including a protrusion in a stacked structure is formed in the first opening according to an embodiment.

Regarding explanation of the drawings, the same or similar reference numerals may be used for the same or similar components.

[Mode for the Invention]

Hereinafter, various embodiments of the disclosure will be described with reference to the accompanying drawings. However, these are not intended to limit the disclosure to a specific embodiment and should be understood as including various modifications, equivalents, and/or alternatives of embodiments of the disclosure.

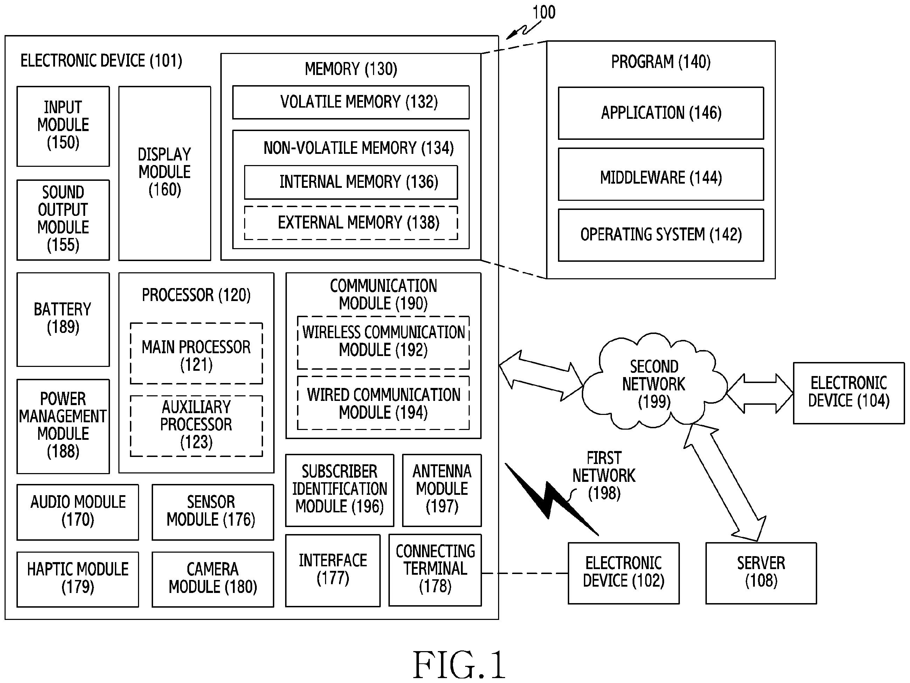

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation.

According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mm Wave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g.,

commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

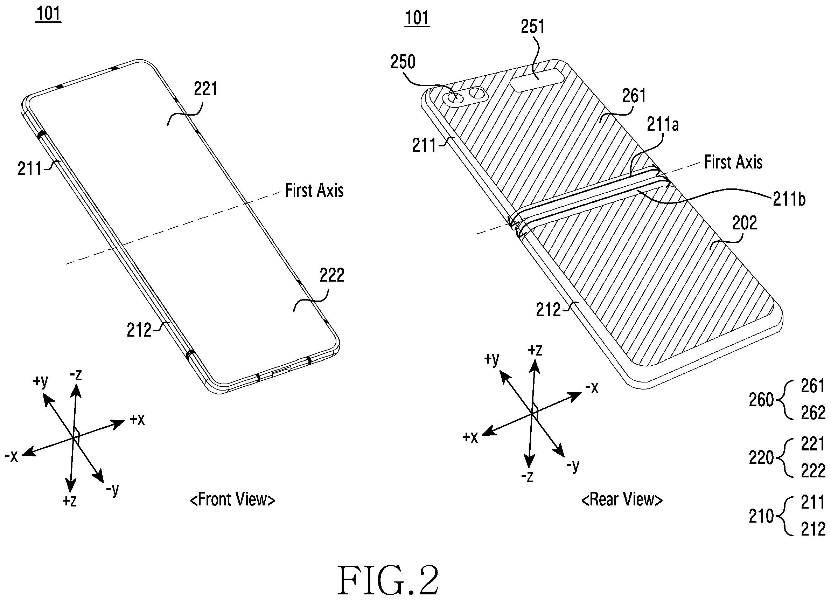

FIG. 2 is a view illustrating a front surface and a rear surface of an electronic device in an unfolded state according to an embodiment.

Referring to FIG. 2, the electronic device 101 according to an embodiment may include a housing 210, a flexible display 220 disposed in the housing 210, and/or a rear surface cover 260. In the disclosure, the surface on which the flexible display 220 is disposed is defined as the front surface of the electronic device 101. The opposite surface of the front surface is defined as the rear surface of the electronic device 101. A surface enclosing the space between the front surface and the rear surface is defined as the side surface of the electronic device 101.

In an embodiment, the housing 210 may include a first housing 211 and a second housing 212. The first housing 211 and the second housing 212 may form a part of the rear surface of the electronic device 101 and at least a part of the side surface. In an embodiment, the first housing 211 and/or the second housing 212 may include a conductive material (for example, metal). It is illustrated in FIG. 2 that the housing 210 includes the first housing 211 and the second housing 212, but this is merely an example. For example, the first housing 211 may be explained as a first part of the housing 210 and the second housing 212 may be explained as a second part of the housing 210.

The housing described in the disclosure is just a term that indicates or represent a configuration forming the exterior of the electronic device 101. For example, the housing may be replaced by a frame. For example, the housing 210 may be replaced by a frame, and the first housing 211 may be replaced by a first frame and the second housing 212 may be replaced by a second frame.

According to an embodiment, the rear surface cover 260 may form the rear surface of the electronic device 101 by coupling with the housing 210. For example, a first rear surface cover 261 may be coupled with the first housing 211, and a second rear surface cover 262 may be coupled with the second housing 212. In an example, the first housing 211 and the first rear surface cover 261, and the second housing 212 and the second rear surface cover 262 may form at least a part of the rear surface of the electronic device 101. In an embodiment, the housing 210 of the electronic device 101 is illustrated as a configuration distinguished from the rear surface cover 260, but in another embodiment, the housing 210 may be integrally formed with the rear surface cover 260.

In an embodiment, the rear surface cover 260 may include an insulating material (for example, a plastic resin). In an embodiment, the rear surface cover 260 may include a conductive material (for example, aluminum).

According to an embodiment, the electronic device 101 may further include a hinge structure connecting the first housing 211 and the second housing 212 such that the second housing 212 rotates with respect to the first housing 211.

According to an embodiment, the first housing 211 and the second housing 212 may be disposed on both sides with reference to a folding axis (for example, a first axis) which is parallel to the x-axis, and may have a substantially symmetrical shape with respect to the folding axis (for example, the first axis). However, the shapes of the first housing 211 and the second housing 212 are not limited to the symmetrical shape, and the first housing 211 and the second housing 212 may have an asymmetrical shape with respect to the folding axis (for example, the first axis).

According to an embodiment, the electronic device 101 may have an unfolded state, a folded state, and/or an intermediate state. In an embodiment, the state of the electronic device 101 may vary according to an angle or a distance formed by the first housing 211 and the second housing 212. For example, a state in which the first housing 211 and the second housing 212 are disposed to form an angle of 180 degrees may be referred to as an unfolded state.

In another example, a state in which the first housing 211 and the second housing 212 are disposed to face each other may be referred to as a folded state. In still another example, a state in which the first housing 211 and the second housing 212 are disposed to form a certain angle may be referred to as an intermediate state. However, a specific angle formed by the first housing 211 and the second housing 212 in the folded state and the unfolded state is just for the convenience of explanation and is not limited thereto.

In an embodiment, the first housing 211 may include a first edge 211a which is adjacent to the folding axis (for example, the first axis) and is substantially parallel with the folding axis, and the second housing 212 may include a second edge 212a which is adjacent to the folding axis (for example, the first axis) and is substantially parallel with the folding axis. In an embodiment, when the electronic device 101 is in the unfolded state, the first edge 211a of the first housing 211 and the second edge 212a of the second housing 212 may be in contact with or may be spaced apart from each other by a predetermined distance.

According to an embodiment, in the unfolded state, the first edge 211a of the first housing 211 may correspond to the second edge 212a of the second housing 212. For example, in the folded state, the first edge 211a of the first housing 211 and the second edge 212a of the second housing 212 may face each other.

In an embodiment, at least a part of the first housing 211 and the second housing 212 may be made of a metallic material (for example, aluminum) or a non-metallic material having rigidity of a selected size to support the flexible display 220.

In an embodiment, the housing 210, the rear surface cover 260, and the flexible display 220 may form an inner space to have various components (for example, a printed circuit board or a battery) of the electronic device 101 disposed therein.

According to an embodiment, the flexible display 220 may be disposed in the housing 210. For example, the flexible display 220 may be seated in a recess formed by the housing 210, and may form most of the front surface of the electronic device 101. In an embodiment, the flexible display 220 may include a first area 221 and a second area 222. The first area 221 and the second area 222 of the flexible display 220 may be divided with reference to the first axis along which the electronic device 101 is folded or unfolded. The flexible display 220 divided into areas as shown in FIG. 2 is merely an example, and in another embodiment, the flexible display 220 may be divided into two or more areas according to a structure or a function. For example, the flexible display 220 may be divided into a folding area that has a predetermined curvature when the electronic device 101 is folded with reference to the folding axis (for example, the first axis), a first area that is adjacent to the first housing 211 with reference to the folding area, and a second area that is adjacent to the second housing 212. The first area 221 and the second area 222 may have a substantially symmetrical shape with reference to the folding axis (for example, the first axis).

According to an embodiment, arrangement structures of the first area 221 and the second area 222 of the flexible display 220 may vary according to a state of the electronic device 101. For example, when the electronic device 101 is in the unfolded state, the first area 221 and the second area 222 of the flexible display 220 may form an angle of 180 degrees with each other, and may face in the same direction (for example, the -z direction).

In another example, when the electronic device 101 is in the folded state, the first area 221 and the second area 222 of the flexible display 220 may form a narrow angle (for example, between 0 and 10 degrees) with each other, and may face each other. In still another example, when the electronic device 101 is in the intermediate state, the first area 221 and the second area 222 of the flexible display 220 may form an angle that is larger than in the folded state and smaller than in the unfolded state. In this case, at least a part of the flexible display 220 may be formed of a curved surface having a predetermined curvature, and in this case, the curvature may be smaller than in the folded state.

However, the specific angle formed by the first area 221 and the second area 222 in the folded state and the unfolded state as described above is just for the convenience of explanation, and is not limited.

According to an embodiment, the electronic device 101 may include a camera hole 250 and/or a sub display 251. In an embodiment, the camera hole 250 may be a hole through which at least one lens of a camera module 280 is exposed. External light of the electronic device 101 may enter the camera module 280 disposed in the electronic device 101 through the camera hole 250. In an embodiment, when the electronic device 101 is in the folded state, the sub-display 251 may display a designated object (for example, a present time, a remaining capacity of the battery of the electronic device 101).

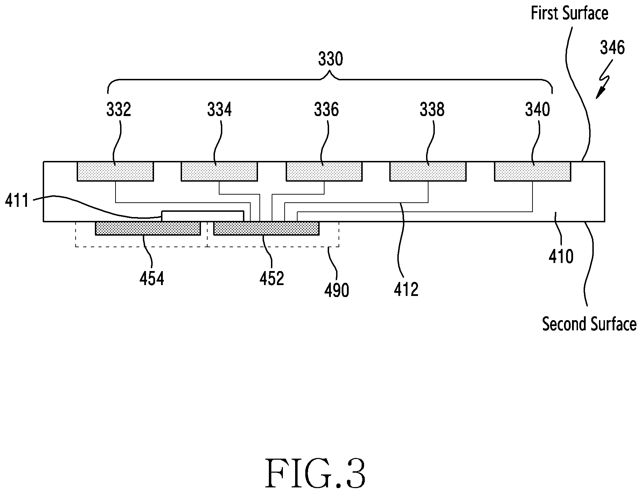

FIG. 3 is a cross-sectional view illustrating a first antenna module according to an embodiment.

Referring to FIG. 3, the first antenna module 346 according to an embodiment may include a first printed circuit board (PCB) 410, first conductive patches 330, a wireless communication circuit 452, and/or a power management integrate circuit (PMIC) 454. In an embodiment, the first antenna module 346 may further include a shield member 490 (for example, a shield can).

In an embodiment, the first PCB 410 may include a plurality of conductive layers and a plurality of nonconductive layers which are stacked alternately with the conductive layers. The first PCB 410 may provide electrical connection between various electronic components disposed in the first PCB 410 by using wires and conductive vias, which are formed in the conductive layers. For example, the wireless communication circuit 452 may be electrically connected with the PMIC 454 through a first wire 411 of the first PCB 410. In another example, the wireless communication circuit 452 may be electrically connected with the first conductive patches 330 through second wires 412.

In an embodiment, the first antenna module 346 may include the first conductive patches 330. For example, the first antenna module 346 may include a first conductive patch 332, a second conductive patch 334, a third conductive patch 336, a fourth conductive patch 338 and/or a fifth conductive patch 340. In an embodiment, the first conductive patches 330 may operate as antenna elements to form directional beams. In an embodiment, the first conductive patches 330 may be formed on a first surface of the first PCB 410 as shown in FIG. 3. In another embodiment, the first conductive patches 330 may be formed inside the first PCB 410. According to an embodiment, the first antenna module 346 may further include a plurality of antenna arrays (for example, dipole antenna arrays and/or additional patch antenna arrays) of the same or different shapes or types, in addition to the first conductive patches 330.

EP 4 539 250 A1

In an embodiment, the wireless communication circuit 452 may be disposed on a second surface which is opposite to the first surface of the first PCB 410. In an embodiment, the wireless communication circuit 452 may be configured to process a radio frequency (RF) signal of a designated frequency band (for example, a frequency band of 10 GHz or higher) which is transmitted and/or received through the first conductive patches 330. According to an embodiment, the wireless communication circuit 452 may convert a baseband signal acquired from the processor 120 into an RF signal of a designated frequency band to transmit the RF signal of the designated frequency band. The wireless communication circuit 452 may convert an RF signal of a designated frequency band received through the first conductive patches 330 into a baseband signal, and may provide the baseband signal to the processor 120. For example, the wireless communication circuit 452 may be a radio frequency integrated circuit (RFIC).

According to an embodiment, an RF signal transmitted and/or received in a frequency band of about 10 GHz or higher may have polarization. For example, a first RF signal of a frequency band of about 10 GHz or high may have vertical polarization characteristics, and a second RF signal of a frequency band of about 10 GHz or higher may have horizontal polarization characteristics. Accordingly, the electronic device 101 may transmit a variety of information to an external device by using the first RF signal and/or the second RF signal having different polarization characteristics.

According to another embodiment, the wireless communication circuit 452 may up-convert an IF signal (for example, about 9 GHz to about 11 GHz) acquired from an intermediate frequency integrate circuit (IFIC) into an RF signal of a selected band to transmit the RF signal. In addition, the wireless communication circuit 452 may down-convert an RF signal acquired through the first conductive patches 330 into an IF signal, and may transmit the IF signal to the IFIC.

According to an embodiment, the PMIC 454 may be disposed on the second surface of the first PCB 410. The PMIC 454 may provide necessary power to various electronic components (for example, the wireless communication circuit 452) of the first antenna module 346.

In an embodiment, the shield member 490 may be disposed on the second surface of the first PCB 410 to electromagnetically shield at least one of the wireless communication circuit 452 or the PMIC 454. For example, the shield member 490 may be disposed on the second surface of the first PCB 410 in a form that covers the wireless communication circuit 452 and/or the PMIC 454. In an embodiment, the shield member 490 may include, but not be limited to, an encapsulant like an epoxy molding compound (EMC) or a shield can.

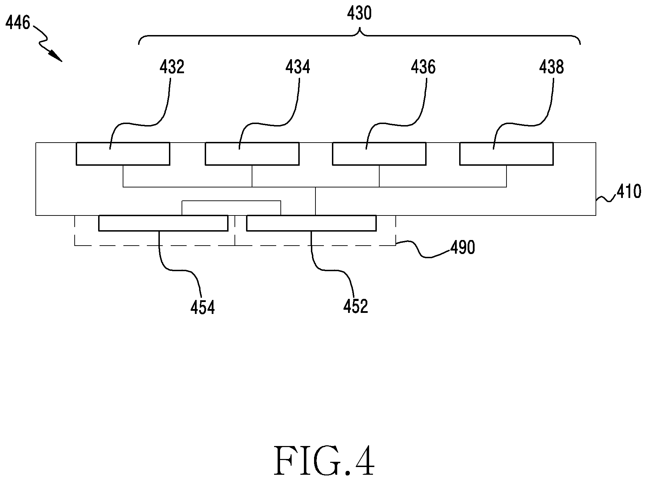

It is illustrated in FIG. 3 that the first antenna module 346 includes the first conductive patches 330 forming a 1x5 antenna array, but this should not be considered as limiting, and the first antenna module 346 may include conductive patches provided in various numbers and having various arrangement structures. For example, the first antenna module 346 may include the first conductive patch 332 and the second conductive patch 334, and the first conductive patch 332 and the second conductive patch 334 may form a 1x2 antenna array. In another example, the first antenna module 346 may include the first conductive patch 332, the second conductive patch 334, the third conductive patch 336, and the fourth conductive patch 338, and the first conductive patch 332, the second conductive patch 334, the third conductive patch 336, and the fourth conductive patch 338 may form a 1x4 antenna array. Hereinafter, an antenna module of another embodiment including conductive patch forming a 1x4 antenna array will be described with reference to FIG. 4.

FIG. 4 is a view illustrating a first antenna module according to an embodiment.

Referring to FIG. 4, the first antenna module 446 according to an embodiment may include a plurality of conductive patches 430. For example, the first antenna module 446 may include a first conductive patch 432, a second conductive patch 434, a third conductive patch 436, and/or a fourth conductive patch 438. In an embodiment, the first conductive patch 432, the second conductive patch 434, the third conductive patch 436, and the fourth conductive patch 438 may form a 1x4 antenna array.

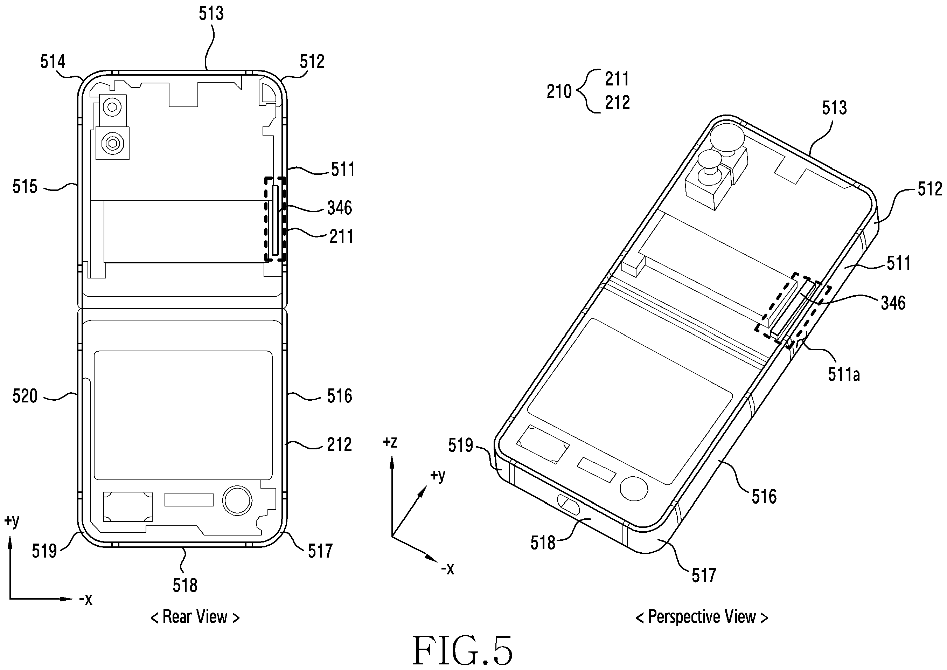

FIG. 5 is a view for illustrating a position of an antenna module disposed in an electronic device according to an embodiment.

Referring to FIG. 5, the electronic device 101 according to an embodiment may include a first antenna module 346.

According to an embodiment, the first housing 211 may include a first conductive portion 511, a second conductive portion 512, a third conductive portion 513, a fourth conductive portion 514 and/or a fifth conductive portion 515. For example, the first conductive portion 511, the second conductive portion 512, the third conductive portion 513, the fourth conductive portion 514 and/or the fifth conductive portion 515 may be disposed to be spaced apart from one another with insulating materials formed therebetween. For example, an insulating member may be disposed between the first conductive portion 511 and the second conductive portion 512.

However, the above explanations of the first conductive portion 511, the second conductive portion 512, the third conductive portion 513, the fourth conductive portion 514 and/or the fifth conductive portion 515 are merely an example. In another embodiment, the first conductive portion 511, the second conductive portion 512, the third conductive portion 513, the fourth conductive portion 514 and/or the fifth conductive portion 515 may be coupled with one another or may be integrally formed with one another.

According to an embodiment, the second housing 212 may include a sixth conductive portion 516, a seventh conductive portion 517, an eighth conductive portion 518, a ninth conductive portion 519 and/or a tenth conductive portion 520. For example, the sixth conductive portion 516, the seventh conductive portion 517, the eighth conductive portion 518, the ninth conductive portion 519 and/or the tenth conductive portion 520 may be disposed to be spaced apart from one another with insulating materials formed therebetween. For example, an insulating member may be disposed between the sixth conductive portion 516 and the seventh conductive portion 517.

However, the above explanations of the sixth conductive portion 516, the seventh conductive portion 517, the eighth conductive portion 518, the ninth conductive portion 519 and/or the tenth conductive portion 520 are merely an example. In another embodiment, the sixth conductive portion 516, the seventh conductive portion 517, the eighth conductive portion 518, the ninth conductive portion 519 and/or the tenth conductive portion 520 may be coupled with one another or may be integrally formed with one another.

According to an embodiment, the first antenna module 346 may be disposed adjacent to the housing 210. For example, the first antenna module 346 may be disposed adjacent to the first conductive portion 511 forming a first side surface 511a of the electronic device 101. For example, the first antenna module 346 may be disposed adjacent to the first conductive portion 511 such that first conductive patches 330 of the first antenna module 346 face in a first direction (for example, the -x direction). The first direction may be a direction that is perpendicular to the first conductive portion 511. Alternatively, the first direction may be a direction that is perpendicular to the first side surface 511a.

According to an embodiment, the first antenna module 346 may form a beam pattern in the first direction (for example, the -x direction).

According to an embodiment, the electronic device 101 may include a second antenna module and/or a third antenna module in addition to the first antenna module 346. In an embodiment, the second antenna module may be disposed adjacent to the fifth conductive portion 515, and the third antenna module may be disposed to face the rear surface of the electronic device 101. For example, the second antenna module may be disposed adjacent to the fifth conductive portion 515 such that second conductive patches of the second antenna module face in a second direction (for example, the +x direction). The second direction may be a direction that is perpendicular to the fifth conductive portion 515. For example, the third antenna module may be disposed inside the first housing 210 such that third conductive patches of the third antenna module face the rear surface of the electronic device 101.

According to an embodiment, the second antenna module may form a beam pattern in the second direction (for example, the +x direction), and the third antenna module may form a beam pattern in a direction toward the rear surface.

It is illustrated in FIG. 5 that the first antenna module 346 is disposed adjacent to the first conductive portion 511, but this is merely an example. The first antenna module 346 may be disposed in various positions within the first housing 211 or the second housing 212. For example, the first antenna module 346 may be disposed inside the second housing 212 and may be disposed adjacent to the sixth conductive portion 516 of the second housing 212. For example, the first antenna module 346 may be disposed adjacent to the sixth conductive portion 516 such that the conductive patches of the first antenna module 346 face in the first direction (for example, the -x direction).

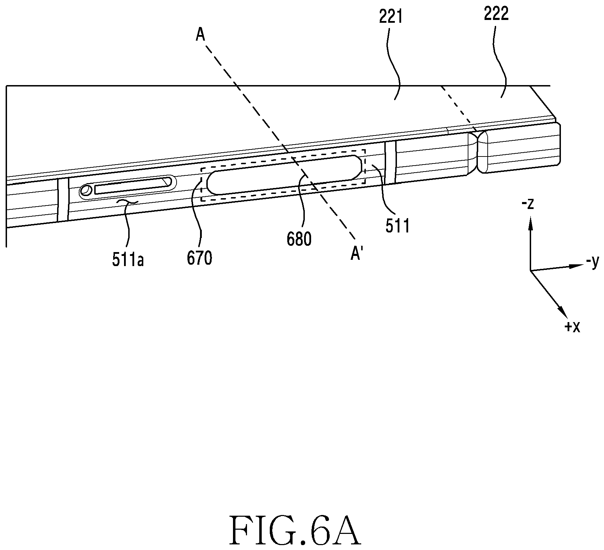

FIG. 6A is a view for illustrating the first conductive portion to which the first antenna module is disposed adjacent, and a recess formed in the first conductive portion according to an embodiment.

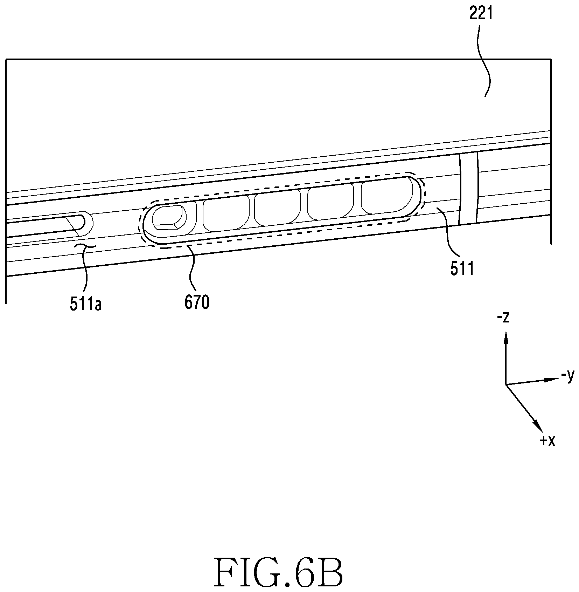

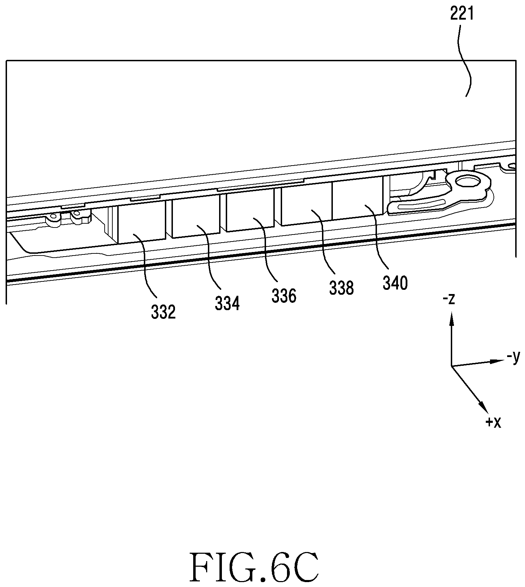

Referring to FIG. 6A, a recess 670 may be formed in the first conductive portion 511 of the first housing 211 according to an embodiment. It is illustrated in FIG. 6A that the recess 670 is formed in the first conductive portion 511, but this is just for the convenience of explanation, and it may be illustrated that the first conductive portion 511 includes the recess 670. The recess 670 of FIG. 6 may be merely a term to describe a structure that is recessed into the first conductive portion 511 by a designated depth, and may be replaced by various terms.

According to an embodiment, a dielectric material 680 may be disposed in the recess 670. In an embodiment, the dielectric material 680 may be disposed in the recess 670 to form the first side surface 511a of the electronic device 101 along with the first conductive portion 511. In an embodiment, the recess 670 may have a rectangular shape, but is not limited thereto and may have various shapes. In an embodiment, the recess 670 may be formed to have a size and a shape to overlap the first conductive patches 330 included in the first antenna module 346 when viewed from the first direction (for example, the -x direction).

In an embodiment, an RF signal that is transmitted and/or received by the first conductive patches 330 of the first antenna module 501 may pass through the recess 670 and the dielectric material 680 disposed in the recess 670.

FIG. 6B is a view for illustrating a shape of the first side surface from which the dielectric material disposed in the recess is removed according to an embodiment.

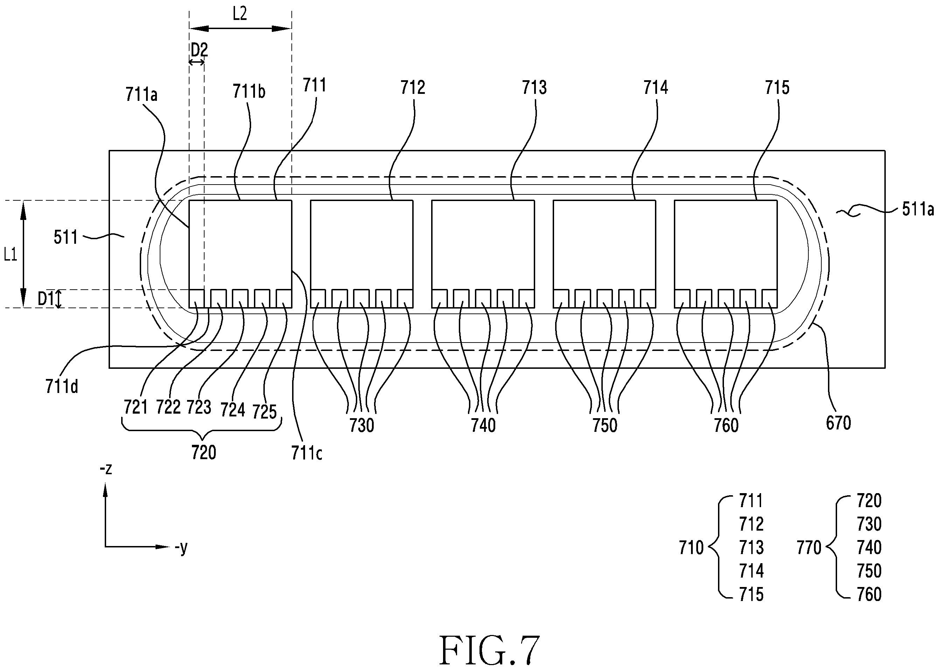

Referring to FIG. 6B, the first side surface 511a on which the dielectric material 680 is removed or omitted from the recess 670 according to an embodiment is illustrated. A plurality of openings, which will be described in detail in FIG. 7, may be formed in the recess 670 according to an embodiment.

FIG. 6C is a view for illustrating positions of the first conductive patches of the first antenna module.

Referring to FIG. 6C, the interior of the electronic device 101 from which the first conductive portion 511 forming the first side surface 511a is removed according to an embodiment is illustrated. The first conductive patches 330 of the first antenna module 346 may be disposed to face in a designated direction (for example, the +x direction). In an example, the direction in which the first conductive patches 330 of the first antenna module 346 face may substantially correspond to the plurality of openings formed in the first conductive portion 511. Hereinafter, the plurality of openings formed in the first conductive portion 511 will be described with reference to FIG. 7.

FIG. 7 is a view for illustrating conductive structures formed in the plurality of openings according to an embodiment.

FIG. 7 is a view illustrating the recess 670 formed in the first conductive portion 511 as viewed from the first direction (for example, the -x direction), without the dielectric material 680 disposed in the recess 670 of FIG. 6.

Referring to FIG. 7, the plurality of openings 710 may be formed in the first conductive portion 511 of the first housing 211 according to an embodiment. For example, a first opening 711, a second opening 712, a third opening 713, a fourth opening 714 and/or a fifth opening 715 may be formed in the first conductive portion 511.

In the disclosure, it is illustrated that the plurality of openings 710 are formed in the first conductive portion 511, but this is for the convenience of explanation and it may be illustrated that the first conductive portion 511 includes the plurality of openings 710. In the disclosure, it is illustrated that the plurality of openings 710 are formed in the first conductive portion 511, but this is for the convenience of explanation, and it may be illustrated that the plurality of openings 710 are formed in the recess 670.

According to an embodiment, the plurality of openings 710 may correspond to the first conductive patches 330 of the first antenna module 346, respectively. For example, the first opening 711 may correspond to the first conductive patch 332, the second opening 712 may correspond to the second conductive patch 334, and the third opening 713 may correspond to the third conductive patch 336. The fourth opening 714 may correspond to the fourth conductive patch 338, and the fifth opening 715 may correspond to the fifth conductive patch 340. According to an embodiment, the plurality of openings 710 may include edges. For example, the first opening 711 may include a first edge 711a, a second edge 711b, a third edge 711c, and/or a fourth edge 711d. In an embodiment, the second edge 711b may be perpendicular to the first edge 711a. The third edge 711c may be parallel with the first edge 711a and may be perpendicular to the second edge 711b. The fourth edge 711d may be parallel with the second edge 711b and may be perpendicular to the third edge 711c. The second opening 712, the third opening 713, the fourth opening 714, and the fifth opening 715 may include substantially the same edges as the first opening 711.

According to an embodiment, each of the plurality of openings 710 may have a designated height and a designated width. For example, as the height and the width of each of the plurality of openings 710 are greater, it may be more advantageous to radiation of RF signals. However, the height and the width of each of the plurality of openings 710 may be limited considering design utilization. However, the height of each of the plurality of openings 710 should be higher than or equal to a designated minimum height to radiate RF signals, and the width of each of the plurality of openings 710 should be greater than or equal to a minimum width. For example, the minimum height or minimum width may be obtained by Equation 1 presented below:

$$f_c = \frac{c}{2a\sqrt{\varepsilon}} \ldots \text{Equation 1}$$

In Equation 1, $f_c$ is a value less than or equal to a half of the lowest frequency of an RF signal passing through an opening (for example, the first opening 711), a is a minimum height or a minimum width of an opening, $\varepsilon$ is a permittivity of a dielectric material filling an opening, and c is a velocity of light.

Accordingly, the minimum height or minimum width of the plurality of openings 710 may be an a value that is obtained through Equation 1, and the plurality of openings 710 should have a height and a width greater than or equal to a.

In an embodiment, the plurality of openings 710 may have a designated height and a designated width. For example, the first opening 711 may include the first edge 711a, and the first edge 711a corresponding to the height of the first opening 711 may have a first length L1 (for example, 3.5 mm). In an example, the first opening 711 may include the second edge 711b which is substantially perpendicular to the first edge 711a, and the second edge 711b corresponding to the width of the first opening 711 may have a second length L2 (for example, 3.5 mm). In an example, the first length L1 and the second length L2 may be equal to each other or may be different from each other.

For example, the first opening 711 may include the third edge 711c, and third edge 711c corresponding to the height of the first opening 711 may have the first length L1 (for example, 3.5 mm). In an example, the first opening 711 may include the fourth edge 711d, and the fourth edge 711d may have the second length L2 (for example, 3.5 mm). According to an embodiment, the first length L1 may be greater than or equal to the minimum width obtained through Equation 1. The second length L2 may be greater than or equal to the minimum height obtained through Equation 1. According to an embodiment, the minimum height and the minimum width of each of the plurality of openings 710 may not change regardless of the presence or absence of protrusions (for example, a first protrusion 721, a second protrusion 722, a third protrusion 723, a fourth protrusion 724, and/or a fifth protrusion 725) of a first conductive structure 720. The minimum height and the minimum width may be referred to as a minimum height and a minimum width to allow an RF signal to pass through the plurality of openings 710 without a great loss.

According to an embodiment, a distance from the first opening 711 to the fifth opening 715 may be about 22.3 mm. For example, a distance from the first edge 711a of the first opening 711 to a right edge of the fifth opening 715 may be about 22.3 mm.

According to an embodiment, a plurality of conductive structures 770 may be formed in the plurality of openings 710, respectively. For example, a first conductive structure 720 may be formed in the first opening 711, a second conductive structure 730 may be formed in the second opening 712, and a third conductive structure 740 may be formed in the third opening 713. A fourth conductive structure 750 may be formed in the fourth opening 714, and a fifth conductive structure 760 may be formed in the fifth opening 715.

According to an embodiment, the first conductive structure 720 formed in the first opening 711 may include a plurality of protrusions. For example, the first conductive structure 720 may include a first protrusion 721, a second protrusion 722, a third protrusion 723, a fourth protrusion 724, and/or a fifth protrusion 725. In an embodiment, each of the plurality of protrusions of the first conductive structure 720 may be formed in a cuboid shape. FIG. 7 is a view of the recess 670 as viewed from the second direction (for example, the -x direction), and hence, the first protrusion 721, the second protrusion 722, the third protrusion 723, the fourth protrusion 724 and/or the fifth protrusion 725 are expressed as having a rectangular shape, but substantially, the plurality of protrusions of the first conductive structure 720 may be formed in a cuboid shape. In an embodiment, the first protrusion 721, the second protrusion 722, the third protrusion 723, the fourth protrusion 724 and/or the fifth protrusion 725 may be disposed to be spaced apart from one another by a designated distance.

According to an embodiment, each of the plurality of protrusions of the first conductive structure 720 may have a designated height and a designated width. For example, the first protrusion 721 may have a first height D1 (for example, 0.5 mm) in a third direction (for example, the -z direction), and the first protrusion 721 may have a first width D2 in a fourth direction (for example, the -y direction). For example, each of the second protrusion 722, the third protrusion 723, the fourth protrusion 724, and/or the fifth protrusion 725 may have the first height D1 in the third direction (for example, the -z direction), and may have the first width D2 (for example, 0.5 mm) in the fourth direction (for example, the -y direction).

According to an embodiment, the first conductive structure 720 may be formed on an edge that is adjacent to the first rear surface cover 261 among the edges of the first opening 711. For example, the first conductive structure 720 may be formed on the fourth edge 711d that is adjacent to the first rear surface cover 261 among the edges of the first opening 711. In an example, the first protrusion 721 may be formed on the fourth edge 711d to be positioned at a first corner where the first edge 711a and the fourth edge 711d meet each other. The fifth protrusion 725 may be formed on the fourth edge 712d to be positioned at a second corner where the third edge 711c and the fourth edge 711d meet each other. The second protrusion 722, the third protrusion 723, and the fourth protrusion 724 may be formed on the fourth edge 711d to be positioned between the first protrusion 721 and the fifth protrusion 725.

According to an embodiment, the second conductive structure 730, the third conductive structure 740, the fourth conductive structure 750, and/or the fifth conductive structure 760 may include a plurality of protrusions. The above explanations of the first protrusion 721, the second protrusion 722, the third protrusion 723, the fourth protrusion 724 and/or the fifth protrusion 725 of the first conductive structure 720 may be applied to the plurality of protrusions of the second conductive structure 730, the third conductive structure 740, the fourth conductive structure 750 and/or the fifth conductive structure 760. For example, explanations of positions of the first conductive structure 720 and the plurality of protrusions formed in the first conductive structure 720 may be substantially equally applied to the second conductive structure 730, the third conductive structure 740, the fourth conductive structure 750 and/or the fifth conductive structure 760. For example, explanations of the shape of the plurality of protrusions of the first conductive structure 720 may be substantially equally applied to the second conductive structure 730, the third conductive structure 740, the fourth conductive structure 750 and/or the fifth conductive structure 760.

According to an embodiment, the plurality of conductive structures 770 formed in the plurality of openings 710, respectively, may be formed by etching the first conductive portion 511, or by attaching a metallic tape to the plurality of openings 710. In another example, the plurality of conductive structures 770 formed in the plurality of openings 710, respectively, may be formed by a metallic tape bonded to one surface of the dielectric material filling the plurality of openings 710.

In the disclosure, it is illustrated that the plurality of conductive structures 770 are occluded by the dielectric material 680 as viewed from the outside of the electronic device 101, but this is merely an example. For example, the plurality of conductive structures 770 may be disposed on an outermost edge of the electronic device 101. For example, the electronic device 101 may include a separate metal layer disposed on an outermost edge of the plurality of conductive structures 770, and a separate opening may be formed on the metal layer not to influence radiation of RF signals.

FIG. 7 illustrates that the first opening 711, the second opening 712, the third opening 713, the fourth opening 714, and/or the fifth opening 715 are formed in the first conductive portion 511, but the number, shapes, and sizes of openings formed in the first conductive portion 511 are not limited thereto, and the openings may be formed in various numbers, shapes, and sizes.

Table 1 shows antenna gain values of RF signals having horizontal polarization and vertical polarization characteristics according to whether the plurality of conductive structures 770 are formed in the plurality of openings 710 when a cumulative probability value in the n261 band is 50% of the maximum value. In an embodiment, n261 may refer to a 28 GHz frequency band (for example, about 27.5 to 28.35 GHz). For example, LOW of the n261 band may be referred to as about 27.5 GHz band, MID may be referred to as about 28 GHz band, and HIGH may be referred to as about 28.35 GHz band.

[Table 1]

| Whether the plurality of conductive structures 770 are formed | n261 (LOW) (Horizontal) | n261 (LOW) (Vertical) | n261 (MID) (Horizontal) | n261 (MID) (Vertical) | n261 (HIGH) (Horizontal) | n261 (HIGH) (Vertical) |
|---|---|---|---|---|---|---|
| Not formed (x) | 1.7 | -1.6 | 2 | -2 | 1.9 | -1.4 |
| Formed (o) | 1.7 | -1.2 | 2 | -1.5 | 1.8 | -0.8 |
| Difference | 0 | 0.4 | 0 | 0.5 | -0.1 | 0.6 |

Referring to table 1, when the plurality of conductive structures 770 are formed in the plurality of openings 710, respectively, according to an embodiment, the antenna gain under the LOW and vertical polarization condition of the n261 band is about -1.2 dB. When the plurality of conductive structures are not formed, the antenna gain under the LOW and vertical polarization condition of the n261 band is about -1.6 dB. Accordingly, under the LOW and vertical polarization condition of the n261 band, when the plurality of conductive structures 770 are formed in the plurality of openings 710, respectively, the electronic device 101 may obtain about 0.4 dB higher antenna gain than when the plurality of conductive structures are not formed. According to an embodiment, under the MID and vertical polarization condition of the n261 band, when the plurality of conductive structures 770 are formed in the plurality of openings 710, respectively, the electronic device 101 may obtain about 0.5 dB higher antenna gain than when the plurality of conductive structures are not formed. In addition, under the HIGH and vertical polarization condition of the n261 band, when the plurality of conductive structures 770 are formed in the plurality of openings 710, respectively, the electronic device 101 may obtain about 0.6 dB higher antenna gain than when the plurality of conductive structures are not formed. As a result, by including the plurality of conductive structures 770 formed in the plurality of openings 710, the electronic device 101 may obtain a relatively broader antenna coverage compared to when the plurality of conductive structures 770 are not included. Table 2 shows antenna gain values of RF signals having horizontal polarization and vertical polarization characteristics according to whether the plurality of conductive structures 770 are formed in the plurality of openings 710 when a cumulative probability value in the n260 band is 50% of the maximum value. In an embodiment, n260 may refer to a 39 GHz frequency band (for example, about 37 to 40 GHz). For example, LOW of the n260 band may be referred to as about 37 GHz band, MID may be referred to as about 38.5 GHz band, and HIGH may be referred to as about 40 GHz band.

[Table 2]

| Whether the plurality of conductive structures 770 are formed | n260 (LOW) (Horizontal) | n260 (LOW) (Vertical) | n260 (MID) (Horizontal) | n260 (MID) (Vertical) | n260 (HIGH) (Horizontal) | n260 (HIGH) (Vertical) |
|---|---|---|---|---|---|---|
| Not formed (x) | 1.2 | 2.1 | 1 | 1.2 | 0.9 | 0.7 |
| Formed (o) | 1.5 | 2.1 | 1.2 | 1.3 | 1.2 | 0.6 |
| Difference | 0.3 | 1 | 0.2 | 0.1 | 0.3 | -0.1 |

Referring to table 2, when the plurality of conductive structures 770 are formed in the plurality of openings 710, respectively, according to an embodiment, the antenna gain under the LOW and horizontal polarization condition of the n260 band is about 1.5 dB. When the plurality of conductive structures are not formed, the antenna gain under the LOW and horizontal polarization condition of the n261 band is about 1.2 dB. Accordingly, under the LOW and horizontal polarization condition of the n260 band, when the plurality of conductive structures 770 are formed in the plurality of openings 710, respectively, the electronic device 101 may obtain about 0.3 dB higher antenna gain than when the plurality of conductive structures are not formed. According to an embodiment, under the MID and horizontal polarization condition of the n260 band, when the plurality of conductive structures 770 are formed in the plurality of openings 710, respectively, the electronic device 101 may obtain about 0.2 dB higher antenna gain than when the plurality of conductive structures are not formed. Under the MID and vertical polarization condition of the n260 band, when the plurality of conductive structures 770 are formed in the plurality of openings 710, respectively, the electronic device 101 may obtain about 0.1 dB higher antenna gain than when the plurality of conductive structures are not formed. According to an embodiment, under the HIGH and horizontal polarization condition of the n260 band, when the plurality of conductive structures 770 are formed in the plurality of openings 710, respectively, the electronic device 101 may obtain about 0.3 dB higher antenna gain than when the plurality of conductive structures are not formed. As a result, by including the plurality of conductive structures 770 formed in the plurality of openings 710, the electronic device 101 may obtain a relatively broader antenna coverage compared to when the plurality of conductive structures 770 are not included.

In the disclosure, it is illustrated that the plurality of conductive structures 770 are formed on one edge of each of the plurality of openings 710, but this is for the convenience of explanation. In another example, the plurality of conductive structures 770 may be formed on inner surfaces of the plurality of openings 710, respectively. For example, the first opening 711 may include an inner surface, and the inner surface of the first opening 711 may include a first side surface, a second side surface which is perpendicular to the first side surface, a third side surface which is perpendicular to the second side surface and is parallel with the first side surface, and a fourth side surface which is perpendicular to the third side surface and is parallel with the second side surface. The first conductive structure 720 may be formed on the first side surface that is adjacent to the first rear surface cover 261 among the side surfaces of the first opening 711. The second conductive structure 730 may be formed on a side surface that is adjacent to the first rear surface cover 261 among the inner surfaces of the second opening 712. Likewise, the third conductive structure 740 may be formed on a side surface of the third opening 713 that is adjacent to the first rear surface cover 261, and the fourth conductive structure 750 may be formed on a side surface of the fourth structure 714 that is adjacent to the first rear surface cover 261. The fifth conductive structure 760 may be formed on a side surface of the fifth opening 715 that is adjacent to the first rear surface cover 261.

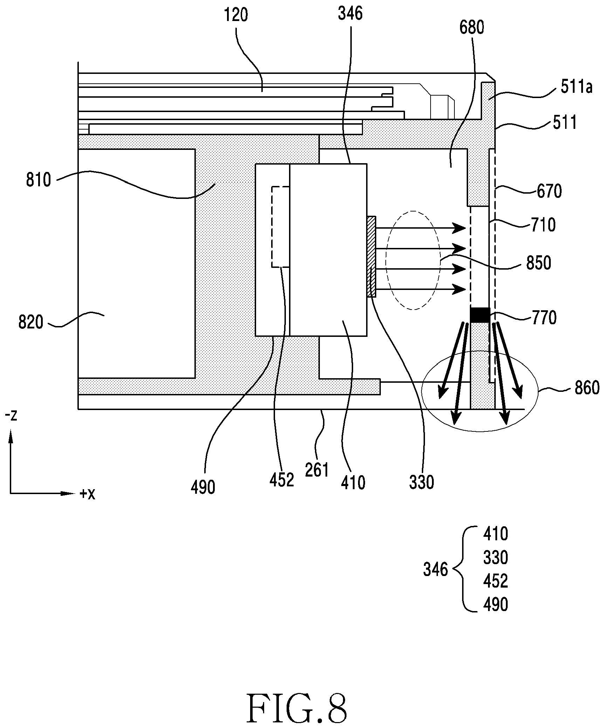

FIG. 8 is a cross-sectional view taken on line A-A' of FIG. 6A, illustrating the electronic device according to an embodiment.

Referring to FIG. 8, the electronic device 101 according to an embodiment may include a support member 810, and the support member 810 may support the first antenna module 346 such that the first antenna module 346 is positioned to form a beam pattern toward the first conductive portion 511. In an embodiment, the support member 810 may separate the battery 820 of the electronic device 101 and the first antenna module 346 to partition from each other. For example, the first antenna module 346 may be disposed in a second direction (for example, the +x direction) with reference to the support member 810, and the battery 820 may be disposed in a first direction (for example, the -x direction) with reference to the support member 810. In an embodiment, the support member 810 and the first conductive portion 511 of the first housing 211 are illustrated as separate components, but the support member 810 and the first conductive portion 511 of the first housing 211 may be integrally formed with each other.

According to an embodiment, the first antenna module 346 may include the first PCB 410, the first conductive patches 330, the shield member 490, and/or the wireless communication circuit 452 (for example, a radio frequency integrated circuit (RFIC)).

According to an embodiment, the first PCB 410 may include a first surface which faces in the second direction (for example, the +x direction) and a second surface which faces in the first direction (for example, the -x direction) opposite to the second direction. In an embodiment, the first conductive patches 330 may be disposed on the first surface of the first PCB 410 or inside the first PCB 410. The wireless communication circuit 542 may be disposed on the second surface of the first PCB 410 or may be disposed inside the first PCB 410.

According to an embodiment, the electronic device 101 may include the dielectric material 680. In an embodiment, the dielectric material 680 may be disposed in the recess 670, the plurality of openings 710 (for example, the first opening 711), and between the plurality of openings 710 and the first antenna module 346. In an embodiment, the dielectric material 680 may form the first side surface 511a of the electronic device 101 along with the first conductive portion 511.

It is illustrated in FIG. 8 that one dielectric material 680 is disposed in the recess 670, the plurality of openings 710, and between the plurality of openings 710 and the first antenna module 346, but this is merely an example. A plurality of dielectric materials having different permittivities may be disposed in the recess 670, the plurality of openings 710, and between the plurality of openings 710 and the first antenna module 346. For example, a first dielectric material having a first permittivity may be disposed in the recess 670, and a second dielectric material having a second permittivity may be disposed in the plurality of openings 710 and between the plurality of openings 710 and the first antenna module 346.

According to an embodiment, as the wireless communication circuit 452 feeds power to the first conductive patches 330, electrical paths may be formed in the plurality of conductive structures 770 (for example, the first conductive structure 720) which are spaced apart from the first conductive patches 330, and RF signals generated based on the electrical paths may be radiated to the outside of the electronic device 101. For example, as the wireless communication circuit 452 feeds power to the first conductive patches 330, a first electrical path may be formed in the first conductive structure 720 which is spaced apart from the first conductive patches 330, and an RF signal generated based on the first electrical path may be radiated to the outside of the electronic device 101. For example, as the wireless communication circuit 452 feeds power to the first conductive patches 330, a second electrical path may be formed in the second conductive structure (for example, the second conductive structure 730 of FIG. 7), and a second RF signal generated based on the second electrical path may be radiated to the outside of the electronic device 101. Likewise, as the wireless communication circuit 452 feeds power to the first conductive patches 330, electrical paths may be formed in the third conductive structure (for example, the third conductive structure 740 of FIG. 7), the fourth conductive structure (for example, the fourth conductive structure 750 of FIG. 7), and/or the fifth conductive structure (for example, the fifth conductive structure 760 of FIG. 7), respectively, and RF signals generated based on the electrical paths may be radiated to the outside of the electronic device 101.

According to an embodiment, as the wireless communication circuit 452 feeds power to the first conductive patches 330, the first conductive patches 330 may radiate first RF signals 850. For example, the first conductive patches 330 may radiate the first RF signals 850 in a designated direction (for example, the +x direction). For example, the first conductive patches 330 may radiate the first RF signals 850 toward the plurality of openings 710 (for example, the first opening 711).

According to an embodiment, second RF signals 860 may be radiated from the plurality of conductive structures 770 based on the electrical paths formed in the plurality of conductive structures 770 by the first RF signals 850. For example, the second RF signals 860 may be radiated from the plurality of conductive structures 770 toward the first rear surface cover 261. For example, the second RF signals 860 may be radiated from the plurality of conductive structures 770 in a designated direction (for example, the +z direction).

According to an embodiment, as the first RF signals 850 are radiated from the first conductive patches 330, the electrical paths may be formed in the plurality of conductive structures 770 by a coupling method. The second RF signals 860 may be generated by the electrical paths formed in the plurality of conductive structures 770.

According to an embodiment, the first RF signals 850 may be radiated toward the plurality of openings 710 (for example, the first opening 711), and the second RF signals 860 may be radiated toward the first rear surface cover 261, and accordingly, the electronic device 101 may obtain a relatively broader antenna coverage than when the plurality of conductive structure 770 are not provided.

According to an embodiment, the first RF signals 850 and/or the second RF signals 860 transmitted and/or received as the wireless communication circuit 452 feeds power to the first conductive patches 330 may pass through the dielectric material 680.

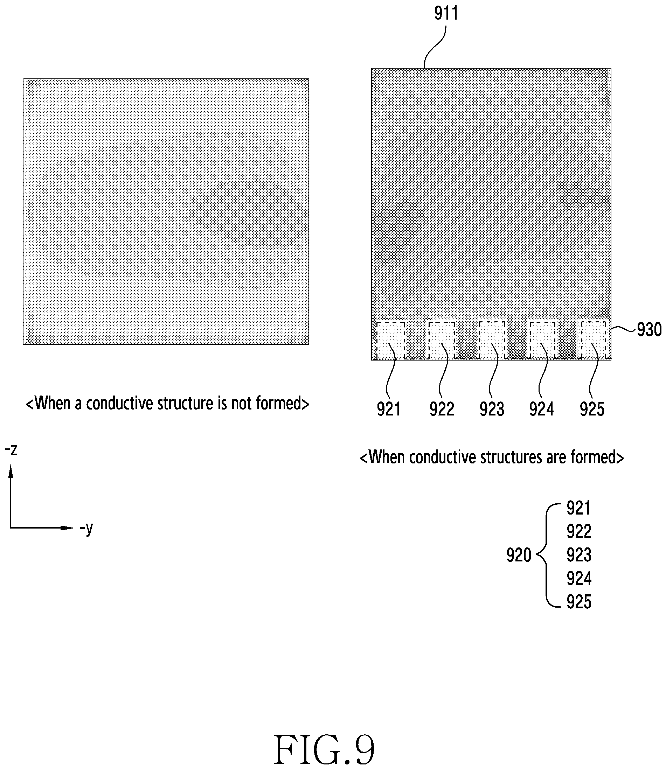

FIG. 9 illustrates a radiation pattern in case that no conductive structure is formed in each of the plurality of openings, and a radiation pattern when a conductive structure is formed in each of the plurality of openings.

Referring to FIG. 9, a first conductive structure 920 may be formed in a first opening 911 according to an embodiment. The first conductive structure 920 may include a first protrusion 921, a second protrusion 922, a third protrusion 923, a fourth protrusion 924 and/or a fifth protrusion 925. The first opening 911, the first conductive structure 920, the first protrusion 921, the second protrusion 922, the third protrusion 923, the fourth protrusion 924, and the fifth protrusion 925 of FIG. 9 may correspond to the first opening 711, the first conductive structure 720, the first protrusion 721, the second protrusion 722, the third protrusion 723, the fourth protrusion 724, and the fifth protrusion of FIG. 7, respectively in sequence.

According to an embodiment, when the first conductive structure 920 is formed in the first opening 911, an additional radiation pattern is illustrated compared to when no conductive structure is formed in the first opening. Through the illustration of the additional radiation pattern, it may be identified that, when the first conductive structure 920 is formed in the first opening 911, additional RF signals (for example, the second RF signals 860 of FIG. 8) are generated by the first conductive structure 920.

According to an embodiment, as the wireless communication circuit 452 feeds power to the first conductive patches 330, the first RF signals 850 may be generated. Electrical paths 930 may be formed in the first conductive structure 920 by the first RF signals 850. The second RF signals 860 may be generated based on the electrical paths 930 formed in the first conductive structure 920. The second RF signals 860 may be radiated toward the first rear surface cover 261 based on the electrical paths 930.

According to an embodiment, the length of the electrical path 930 may correspond to 1/2 of the length of a wavelength corresponding to a frequency band of the second RF signals 860. For example, the length of the electrical path 930 of the first conductive structure 920 may correspond to 1/2 of the length of a wavelength corresponding to a frequency band of the second RF signals 860. In an embodiment, a current flowing through a radiator (or a conductor) may flow along an edge of the radiator (or the conductor). Accordingly, the length of the electrical path 930 of the first conductive structure 920 corresponding to 1/2 of the length of the wavelength corresponding to the frequency band of the second RF signals 860 may indicate that the length of edges of the first conductive structure 920 substantially corresponds to 1/2 of the length of the wavelength corresponding to the frequency band of the second RF signals 860.

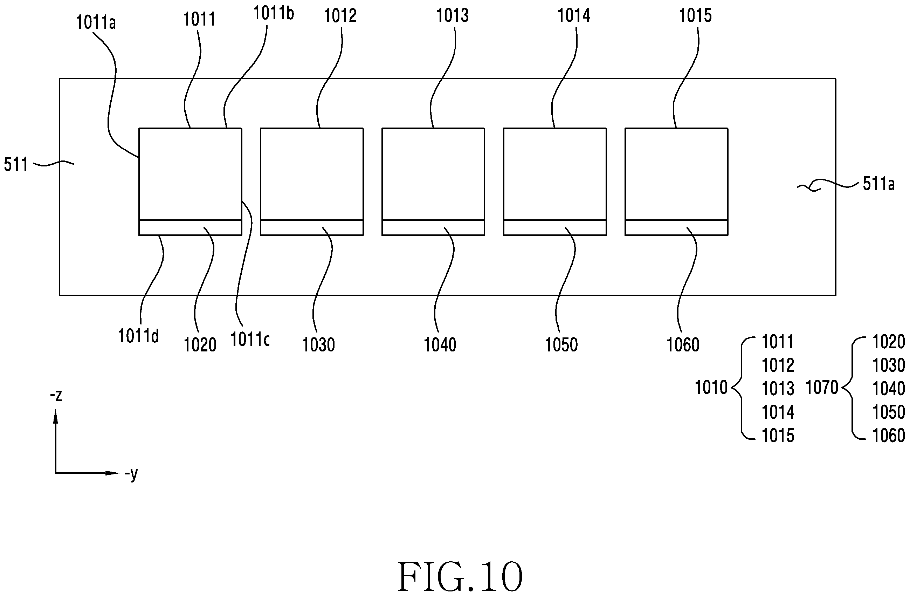

FIG. 10 is a view for illustrating conductive structures formed in a plurality of openings according to an embodiment.

Referring to FIG. 10, a plurality of openings 1010 may be formed in the first conductive portion 511 of the first housing 211 according to an embodiment.

According to an embodiment, the plurality of openings 1010 may correspond to the first conductive patches 330 of the first antenna module 346, respectively. For example, the first opening 1011 may correspond to the first conductive patch 332, the second opening 1012 may correspond to the second conductive patch 334, and the third opening 1013 may correspond to the third conductive patch 336. The fourth opening 1014 may correspond to the fourth conductive patch 338 and the fifth opening 1015 may correspond to the fifth conductive patch 340.

According to an embodiment, the plurality of openings 1010 may include edges. For example, the first opening 1011 may include a first edge 1011a, a second edge 1011b, a third edge 1011c and/or a fourth edge 1011d. In an example, the second edge 1011b may be perpendicular to the first edge 1011a. The third edge 1011c may be parallel with the first edge 1011a and may be perpendicular to the second edge 1011b. The fourth edge 1011d may be parallel with the second edge 1011b and may be perpendicular to the third edge 1011c. The second opening 1012, the third opening 1013, the fourth opening 1014, and the fifth opening 1015 may include substantially the same edges as those of the first opening 1011.

According to an embodiment, a plurality of conductive structures 1070 may be formed in the plurality of openings 1010, respectively. For example, a first conductive structure 1020 may be formed in the first opening 711, a second conductive structure 1030 may be formed in the second opening 712, and a third conductive structure 1040 may be formed in the third opening 713. A fourth conductive structure 1050 may be formed in the fourth opening 714 and a fifth conductive structure 1060 may be formed in the fifth opening 715.

According to an embodiment, the first conductive structure 1020 may be formed on an edge that is adjacent to the first rear surface cover 261 among the edges of the first opening 1011. For example, the first conductive structure 1020 may be formed on the fourth edge 1011d that is adjacent to the first rear surface cover 261 among the edges of the first opening 711.

According to an embodiment, the first conductive structure 1020 may have a cuboid shape. FIG. 10 is a view illustrating the first conductive portion 511 of the first housing 211 as viewed from a first direction (for example, the -x direction), and hence, the first conductive structure 1020 is illustrated as having a rectangular shape, but actually, the first conductive structure 1020 may have a cuboid shape.

According to an embodiment, the second conductive structure 1030 may be formed on an edge that is adjacent to the first rear surface cover 261 among the edges of the second opening 1012. The third conductive structure 1040 may be formed on an edge that is adjacent to the first rear surface cover 261 among the edges of the third opening 1013. The fourth conductive structure 1050 may be formed on an edge that is adjacent to the first rear surface cover 261 among the edges of the fourth opening 1014. The fifth conductive structure 1060 may be formed on an edge that is adjacent to the first rear surface cover 261 among the edges of the fifth opening 1015.

According to an embodiment, the second conductive structure 1030, the third conductive structure 1040, the fourth conductive structure 1050 and/or the fifth conductive structure 1060 may have a cuboid shape, respectively.

According to an embodiment, as the wireless communication circuit 452 feeds power to the first conductive patches 330, electrical paths may be formed in the plurality of conductive structures 1070 which are spaced apart from the first conductive patches 330, and RF signals generated based on the electrical paths may be radiated to the outside of the electronic device 101. For example, as the wireless communication circuit 452 feeds power to the first conductive patches 330, a first electrical path may be formed in the first conductive structure 1020 which is spaced apart from the first conductive patches 330, and an RF signal generated based on the first electrical path may be radiated to the outside of the electronic device 101. For example, as the wireless communication circuit 452 feeds power to the first conductive patches 330, a second electrical path may be formed in the second conductive structure 1030, and a second RF signal generated based on the second electrical path may be radiated to the outside of the electronic device 101. Likewise, as the wireless communication circuit 452 feeds power to the first conductive patches 330, electrical paths may be formed in the third conductive structure 1040, the fourth conductive structure 1050, and/or the fifth conductive structure 1060, respectively, and RF signals generated based on the electrical paths may be radiated to the outside of the electronic device 101.

According to an embodiment, the RF signals generated based on the electrical paths formed in the plurality of conductive structures 1070 may be radiated to the outside of the electronic device 101. For example, the RF signals may be radiated from the plurality of conductive structure 1070 toward the first rear surface cover 261. For example, the second RF signals 860 may be radiated from the plurality of conductive structures 770 in a designated direction (for example, the +z direction).

It is illustrated in FIG. 10 that the first opening 1011, the second opening 1012, the third opening 1013, the fourth opening 1014, and/or the fifth opening 1015 are formed in the first conductive portion 511, but the number, shape, and size of the openings formed in the first conductive portion 511 are not limited thereto and the openings may be formed in various numbers, shapes, and sizes.

Table 3 shows antenna gain values of RF signals having horizontal polarization and vertical polarization characteristics according to shapes of a plurality of conductive structures formed in a plurality of openings when a cumulative probability value in the n261 band is 50% of the maximum value. In an embodiment, n261 may refer to a 28 GHz frequency band (for example, about 27.5 to 28.35 GHz). For example, LOW of the n261 band may be referred to as about 27.5 GHz band, MID may be referred to as about 28 GHz band, and HIGH may be referred to as about 28.35 GHz band.

[Table 3]

| Shapes of the plurality of conductive structures | n261 (LOW) (Horizontal) | n261 (LOW) (Vertical) | n261 (MID) (Horizontal) | n261 (MID) (Vertical) | n261 (HIGH) (Horizontal) | n261 (HIGH) (Vertical) |
|---|---|---|---|---|---|---|
| The plurality of conductive structures 1070 of FIG. 10 | 1.2 | -0.9 | 1.7 | -1.5 | 1.6 | -1 |
| The plurality of conductive structures 770 of FIG. 7 | 1.7 | -1.2 | 2 | -1.5 | 1.8 | -0.8 |
| Difference | 0.5 | -0.3 | 0.3 | 0 | 0.2 | 0.2 |

Referring to table 3, when the plurality of conductive structures 770 of FIG. 7 are formed in the plurality of openings 710, respectively, according to an embodiment, the antenna gain under the LOW and horizontal polarization condition of the n261 band is about 1.7 dB. When the plurality of conductive structures 1070 of FIG. 10 are formed in the plurality of openings 1010, respectively, the antenna gain under the LOW and horizontal polarization condition of the n261 band is about 1.2 dB. Accordingly, under the LOW and horizontal polarization condition of n261 band, when the plurality of conductive structures 770 of FIG. 7 are formed in the plurality of openings 710, respectively, the electronic device 101 may obtain about 0.5 dB higher antenna gain than when the plurality of conductive structures 1070 of FIG. 10 are formed. According to an embodiment, under the MID and horizontal polarization condition of the n261 band, when the plurality of conductive structures 770 are formed in the plurality of openings 710 of FIG. 7, respectively, the electronic device 101 may obtain about 0.3 dB higher antenna gain than when the plurality of conductive structures 1070 of FIG. 10 are formed. In addition, under the HIGH and horizontal polarization condition of the n261 band, when the plurality of conductive structures 770 of FIG. 7 are formed in the plurality of openings 710, respectively, the electronic device 101 may obtain about 0.2 dB higher antenna gain than when the plurality of conductive structures 1070 of FIG. 10 are formed. Under the HIGH and vertical polarization condition of the n261 band, when the plurality of conductive structures 770 of FIG. 7 are formed in the plurality of openings 710, respectively, the electronic device 101 may obtain about 0.2 dB higher antenna gain than when the plurality of conductive structures 1070 of FIG. 10 are formed.

As a result, by including the plurality of conductive structures 770 formed in the plurality of openings 710, respectively, the electronic device 101 may obtain a relatively broader antenna coverage compared to when the plurality of conductive structures 1070 are formed.

Table 4 shows antenna gain values of RF signals having horizontal polarization and vertical polarization characteristics according to shapes of a plurality of conductive structures formed in a plurality of openings when a cumulative probability value in the n260 band is 50% of the maximum value. In an embodiment, n260 may refer to a 39 GHz frequency band (for example, about 37 to 40 GHz). For example, LOW of the n260 band may be referred to as about 37 GHz band, MID may be referred to as about 38.5 GHz band, and HIGH may be referred to as about 40 GHz band.

[Table 4]

| Shapes of the plurality of conductive structures | n260 (LOW) (Horizontal) | n260 (LOW) (Vertical) | n260 (MID) (Horizontal) | n260 (MID) (Vertical) | n260 (HIGH) (Horizontal) | n260 (HIGH) (Vertical) |
|---|---|---|---|---|---|---|
| The plurality of conductive structures 1070 of FIG. 10 | 1 | 1.8 | 0.9 | 1.7 | 0.8 | 0.8 |
| The plurality of conductive structures 770 of FIG. 7 | 1.5 | 2.1 | 1.2 | 1.3 | 1.2 | 0.6 |
| Difference | 0.5 | 0.3 | 0.3 | -0.4 | 0.4 | -0.2 |

Referring to table 4, when the plurality of conductive structures 770 are formed in the plurality of openings 710, respectively, according to an embodiment, the antenna gain under the LOW and horizontal polarization condition of the n260 band is about 1.5 dB. When the plurality of conductive structures 1070 are formed in the plurality of openings 1010, respectively, the antenna gain under the LOW and horizontal polarization condition of the n261 band is about 1 dB. Accordingly, under the LOW and horizontal polarization condition of n260 band, when the plurality of conductive structures 770 of FIG. 7 are formed in the plurality of openings 710, respectively, the electronic device 101 may obtain about 0.5 dB higher antenna gain than when the plurality of conductive structures 1070 of FIG. 10 are formed. According to an embodiment, under the LOW and vertical polarization condition of n260 band, when the plurality of conductive structures 770 of FIG. 7 are formed in the plurality of openings 710, respectively, the electronic device 101 may obtain about 0.3 dB higher antenna gain than when the plurality of conductive structures 1070 of FIG. 10 are formed. Under the MID and horizontal polarization condition of the n260 band, when the plurality of conductive structures 770 are formed in the plurality of openings 710 of FIG. 7, respectively, the electronic device 101 may obtain about 0.3 dB higher antenna gain than when the plurality of conductive structures 1070 of FIG. 10 are formed. According to an embodiment, under the HIGH and horizontal polarization condition of the n260 band, when the plurality of conductive structures 770 of FIG. 7 are formed in the plurality of openings 710, respectively, the electronic device 101 may obtain about 0.4 dB higher antenna gain than when the plurality of conductive structures 1070 of FIG. 10 are formed. As a result, by including the plurality of conductive structures 770 formed in the plurality of openings 710, respectively, the electronic device 101 may obtain a relatively broader antenna coverage compared to when the plurality of conductive structures 1070 are formed.

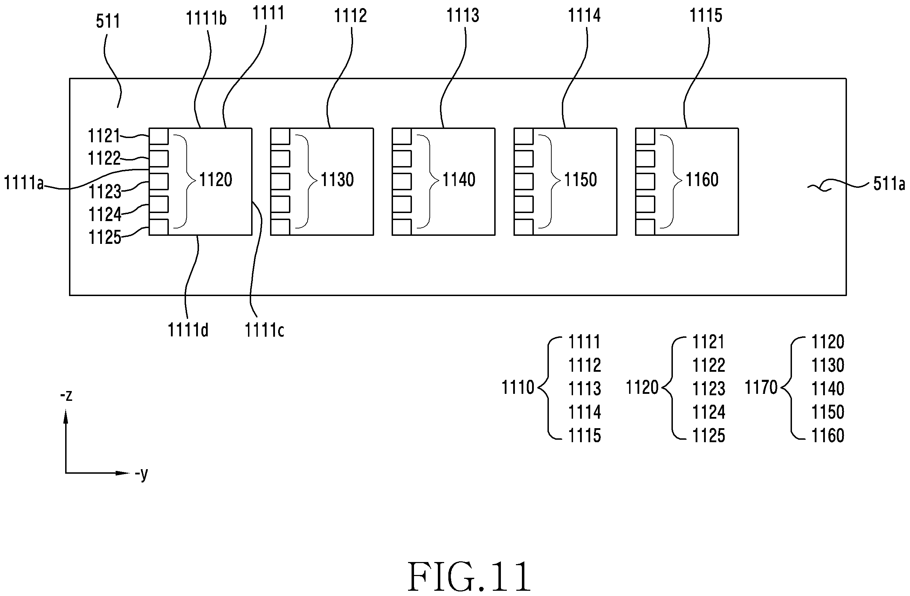

FIG. 11 is a view for illustrating conductive structures formed in a plurality of openings according to an embodiment.

Referring to FIG. 11, a plurality of openings 1110 may be formed in the first conductive portion 511 of the first housing 211 according to an embodiment.

According to an embodiment, the plurality of openings 1110 may correspond to the first conductive patches 330 of the first antenna module 346, respectively. For example, the first opening 1111 may correspond to the first conductive patch 332, the second opening 1112 may correspond to the second conductive patch 334, and the third opening 1113 may correspond to the third conductive patch 336. The fourth opening 1114 may correspond to the fourth conductive patch 338 and the fifth opening 1115 may correspond to the fifth conductive patch 340.

According to an embodiment, the plurality of openings 1110 may include edges. For example, the first opening 1111 may include a first edge 1111a, a second edge 1111b, a third edge 1111c and/or a fourth edge 1111d. In an example, the second edge 1111b may be perpendicular to the first edge 1111a. The third edge 1111c may be parallel with the first edge 1111a and may be perpendicular to the second edge 1111b. The fourth edge 1111d may be parallel with the second edge 1111b and may be perpendicular to the third edge 1111c. The second opening 1112, the third opening 1113, the fourth opening 1114, and the fifth opening 1115 may include substantially the same edges as those of the first opening 1111.

According to an embodiment, a plurality of conductive structures 1170 may be formed in the plurality of openings 1110, respectively. For example, a first conductive structure 1120 may be formed in the first opening 1111, a second conductive structure 1130 may be formed in the second opening 1112, and a third conductive structure 1140 may be formed in the third opening 1113. A fourth conductive structure 1150 may be formed in the fourth opening 1114 and a fifth conductive structure 1160 may be formed in the fifth opening 1115.

According to an embodiment, the first conductive structure 1120 formed in the first opening 1111 may include a plurality of protrusions. For example, the first conductive structure 1120 may include a first protrusion 1121, a second protrusion 1122, a third protrusion 1123, a fourth protrusion 1124, and/or a fifth protrusion 1125. In an embodiment, the plurality of protrusions of the first conductive structure 1120 may be formed in a cuboid shape, respectively. FIG. 11 is a view illustrating the first conductive portion 511 as viewed from a first direction (for example, the -x direction), and hence, the first protrusion 1121, the second protrusion 1122, the third protrusion 1123, the fourth protrusion 1124, and/or the fifth protrusion 1125 are expressed as having a rectangular shape, but substantially, the plurality of protrusions of the first conductive structure 1120 may be formed in a cuboid shape. In an embodiment, the first protrusion 1121, the second protrusion 1122, the third protrusion 1123, the fourth protrusion 1124, and/or the fifth protrusion 1125 may be disposed to be spaced apart from one another by a designated distance.

According to an embodiment, the first conductive structure 1120 may be formed on the first edge 1111a among the edges of the first opening 1111. For example, the first conductive structure 1120 may be formed on the first edge 1111a among the edges of the first opening 1111. In an example, the first protrusion 1121 may be formed on the first edge 1111a to be positioned at a first corner where the first edge 1111a and the second edge 1111b meet each other. The fifth protrusion 1125 may be formed on the first edge 1111a to be positioned at a second corner where the first edge 1111a and the fourth edge 1111d meet each other. The second protrusion 1122, the third protrusion 1123, and the fourth protrusion 1124 may be formed on the first edge 1111a to be positioned between the first protrusion 1121 and the fifth protrusion 1125.

According to an embodiment, the second conductive structure 1130, the third conductive structure 1140, the fourth conductive structure 1150 and/or the fifth conductive structure 1160 may include a plurality of protrusions. The above explanations of the first protrusion 1121, the second protrusion 1122, the third protrusion 1123, the fourth protrusion 1124, and/or the fifth protrusion 1125 of the first conductive structure 1120 may be applied to the plurality of protrusions of the second conductive structure 1130, the third conductive structure 1140, the fourth conductive structure 1150 and/or the fifth conductive structure 1160. For example, explanations of the positions of the first conductive structure 1120 and the plurality of protrusions formed in the first conductive structure 1120 may be substantially equally applied to the second conductive structure 1130, the third conductive structure 1140, the fourth conductive structure 1150 and/or the fifth conductive structure 1160. For example, explanations of the shape of the plurality of protrusions of the first conductive structure 1120 may be substantially equally applied to the second conductive structure 1130, the third conductive structure 1140, the fourth conductive structure 1150 and/or the fifth conductive structure 1160.

It is illustrated in FIG. 11 that the first opening 1111, the second opening 1112, the third opening 1113, the fourth opening 1114, and/or the fifth opening 1115 are formed in the first conductive portion 511, but the number, shape, and size of the openings formed in the first conductive portion 511 are not limited thereto and the openings may be formed in various numbers, shapes, and sizes.

Table 5 shows antenna gain values of RF signals having horizontal polarization and vertical polarization characteristics according to positions where a plurality of conductive structures are formed when a cumulative probability value in the n261 band is 50% of the maximum value. In an embodiment, n261 may refer to a 28 GHz frequency band (for example, about 27.5 to 28.35 GHz). For example, LOW of the n261 band may be referred to as about 27.5 GHz band, MID may be referred to as about 28 GHz band, and HIGH may be referred to as about 28.35 GHz band.

[Table 5]

| Positions where a plurality of conductive structures are formed | n261 (LOW) (Horizontal) | n261 (LOW) (Vertical) | n261 (MID) (Horizontal) | n261 (MID) (Vertical) | n261 (HIGH) (Horizontal) | n261 (HIGH) (Vertical) |
|---|---|---|---|---|---|---|
| Formed on the first edge | 1.5 | -2.2 | 1.7 | -2.3 | 1.6 | -1.7 |
| Formed on the second edge | 1.7 | -1 | 2 | -1.4 | 1.8 | -0.8 |
| Formed on the third edge | 1.5 | -2.2 | 1.7 | -2.3 | 1.6 | -1.7 |
| Formed on the fourth edge | 1.7 | -1.2 | 2 | -1.4 | 1.8 | -0.8 |

Referring to table 5, when the plurality of conductive structures 770 are formed on the lowermost edge (for example, the fourth edge 1111d), an antenna gain may be relatively higher than when the plurality of conductive structures 1170 according to an embodiment are formed on the leftmost edge (for example, the first edge 1111a). Accordingly, by including the plurality of conductive structures 1170 formed on the edge (for example, the fourth edge 1111d) that is relatively adjacent to the first rear surface cover 261 among the edges of the plurality of openings 1110, the electronic device 101 may obtain a relatively higher antenna gain. Table 6 shows antenna gain values of RF signals having horizontal polarization and vertical polarization characteristics according to positions where a plurality of conductive structures are formed when a cumulative probability value in the n260 band is 50% of the maximum value. In an embodiment, n260 may refer to a 39 GHz frequency band (for example, about 37 to 40 GHz). For example, LOW of the n260 band may be referred to as about 37 GHz band, MID may be referred to as about 38.5 GHz band, and HIGH may be referred to as about 40 GHz band.

[Table 6]

| Positions where a plurality of conductive structures are formed | n260 (LOW) (Horizontal) | n260 (LOW) (Vertical) | n260 (MID) (Horizontal) | n260 (MID) (Vertical) | n260 (HIGH) (Horizontal) | n260 (HIGH) (Vertical) |
|---|---|---|---|---|---|---|
| Formed on the first edge | 1.6 | 0.8 | 0.9 | 0.8 | 0.5 | 0.9 |
| Formed on the second edge | 1.5 | 0.8 | 1.3 | 1 | 1.2 | 0.9 |
| Formed on the third edge | 1.8 | 1.2 | 0.9 | 0.7 | 0.3 | 0.7 |
| Formed on the fourth edge | 2.1 | 1.5 | 1.3 | 1.2 | 0.6 | 1.2 |

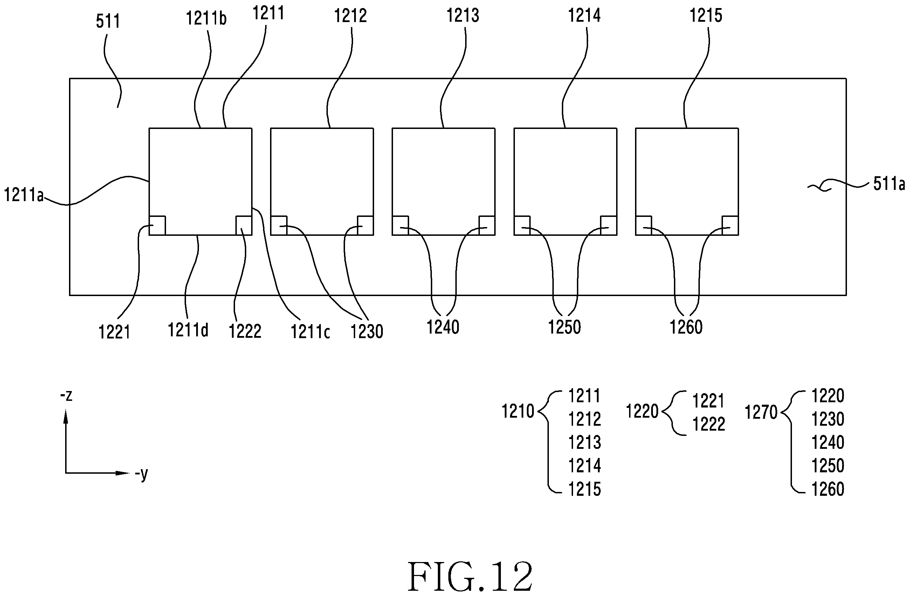

Referring to table 6, when the plurality of conductive structures 770 are formed on the lowermost edge (for example, the fourth edge 1111d), an antenna gain may be relatively higher than when the plurality of conductive structures 1170 according to an embodiment are formed on the leftmost edge (for example, the first edge 1111a). Accordingly, by including the plurality of conductive structures 1170 formed on the edge (for example, the fourth edge 1111d) that is relatively adjacent to the first rear surface cover 261 among the edges of the plurality of openings 1110, the electronic device 101 may obtain a relatively higher antenna gain. FIG. 12 is a view for illustrating conductive structures formed in a plurality of openings according to an embodiment.

Referring to FIG. 12, a plurality of openings 1210 may be formed in the first conductive portion 511 of the first housing 211 according to an embodiment.

According to an embodiment, the plurality of openings 1210 may correspond to the first conductive patches 330 of the first antenna module 346, respectively. For example, the first opening 1211 may correspond to the first conductive patch 332, the second opening 1212 may correspond to the second conductive patch 334, and the third opening 1213 may correspond to the third conductive patch 336. The fourth opening 1214 may correspond to the fourth conductive patch 338 and the fifth opening 1215 may correspond to the fifth conductive patch 340.

According to an embodiment, the plurality of openings 1210 may include edges. For example, the first opening 1211 may include a first edge 1211a, a second edge 1211b, a third edge 1211c and/or a fourth edge 1211d. In an example, the second edge 1211b may be perpendicular to the first edge 1211a. The third edge 1211c may be parallel with the first edge 1211a and may be perpendicular to the second edge 1211b. The fourth edge 1211d may be parallel with the second edge 1211b and may be perpendicular to the third edge 1211c. The second opening 1212, the third opening 1213, the fourth opening 1214, and the fifth opening 1215 may include substantially the same edges as those of the first opening 1211.

According to an embodiment, a plurality of conductive structures 1270 may be formed in the plurality of openings 1210, respectively. For example, a first conductive structure 1220 may be formed in the first opening 1211, a second conductive structure 1230 may be formed in the second opening 1212, and a third conductive structure 1240 may be formed in the third opening 1213. A fourth conductive structure 1250 may be formed in the fourth opening 1214 and a fifth conductive structure 1260 may be formed in the fifth opening 1215.

According to an embodiment, the first conductive structure 1220 formed in the first opening 1211 may include a plurality of protrusions. For example, the first conductive structure 1220 may include a first protrusion 1221 and/or a second protrusion 1222. In an embodiment, the plurality of protrusions of the first conductive structure 1220 may be formed in a cuboid shape, respectively. FIG. 12 is a view illustrating the first conductive portion 511 as viewed from a first direction (for example, the -x direction), and hence, the first protrusion 1221 and/or the second protrusion 1122 are expressed as having a rectangular shape, but substantially, the plurality of protrusions of the first conductive structure 1220 may be formed in a cuboid shape. In an embodiment, the first protrusion 1221 and/or the second protrusion 1222 may be disposed to be spaced apart from each other by a designated distance.

According to an embodiment, the first conductive structure 1220 may be formed on the fourth edge 1211d among the edges of the first opening 1211. For example, the first conductive structure 1220 may be formed on the fourth edge 1211d among the edges of the first opening 1211. In an example, the first protrusion 1221 may be formed on the fourth edge 1211d to be positioned at a first corner where the first edge 1211a and the fourth edge 1211d meet each other. The second protrusion 1222 may be formed on the fourth edge 1211d to be positioned at a second corner where the third edge 1211c and the fourth edge 1211d meet each other.

According to an embodiment, the second conductive structure 1230, the third conductive structure 1240, the fourth conductive structure 1250 and/or the fifth conductive structure 1260 may include a plurality of protrusions. The above explanations of the first protrusion 1221 and/or the second protrusion 1222 of the first conductive structure 1220 may be applied to the plurality of protrusions of the second conductive structure 1230, the third conductive structure 1240, the fourth conductive structure 1250 and/or the fifth conductive structure 1260. For example, explanations of the positions of the first conductive structure 1220 and the plurality of protrusions formed in the first conductive structure 1220 may be substantially equally applied to the second conductive structure 1230, the third conductive structure 1240, the fourth conductive structure 1250 and/or the fifth conductive structure 1260. For example, explanations of the shape of the plurality of protrusions of the first conductive structure 1220 may be substantially equally applied to the second conductive structure 1230, the third conductive structure 1240, the fourth conductive structure 1250 and/or the fifth conductive structure 1260.

It is illustrated in FIG. 12 that the first opening 1211, the second opening 1212, the third opening 1213, the fourth opening 1214, and/or the fifth opening 1215 are formed in the first conductive portion 511, but the number, shape, and size of the openings formed in the first conductive portion 511 are not limited thereto and the openings may be formed in various numbers, shapes, and sizes.

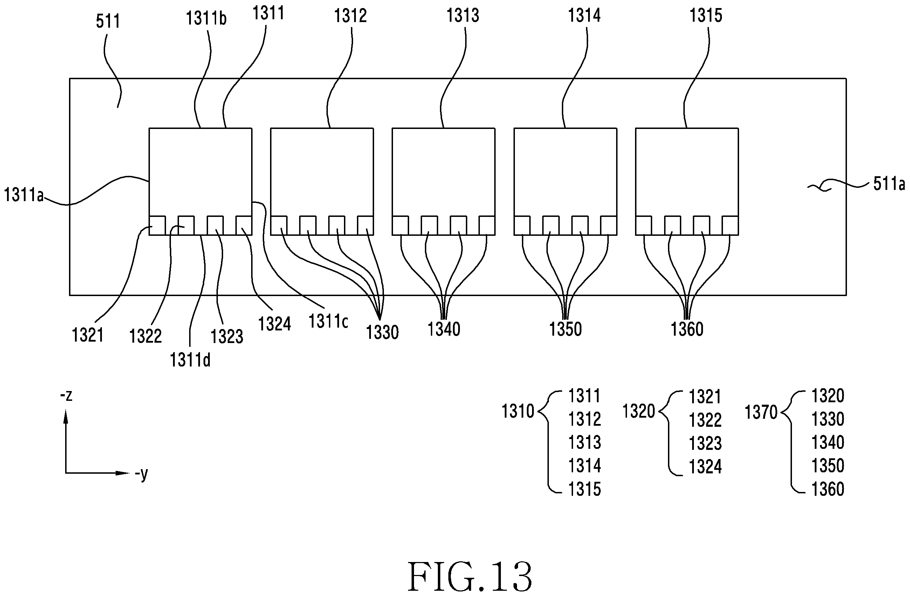

FIG. 13 is a view for illustrating conductive structures formed in a plurality of openings according to an embodiment.

Referring to FIG. 13, a plurality of openings 1310 may be formed in the first conductive portion 511 of the first housing 211 according to an embodiment.

According to an embodiment, the plurality of openings 1310 may correspond to the first conductive patches 330 of the first antenna module 346, respectively. For example, the first opening 1311 may correspond to the first conductive patch 332, the second opening 1312 may correspond to the second conductive patch 334, and the third opening 1313 may correspond to the third conductive patch 336. The fourth opening 1314 may correspond to the fourth conductive patch 338 and the fifth opening 1315 may correspond to the fifth conductive patch 340.

According to an embodiment, the plurality of openings 1310 may include edges. For example, the first opening 1311 may include a first edge 1311a, a second edge 1311b, a third edge 1311c and/or a fourth edge 1311d. In an example, the second edge 1311b may be perpendicular to the first edge 1311a. The third edge 1311c may be parallel with the first edge 1311a and may be perpendicular to the second edge 1311b. The fourth edge 1311d may be parallel with the second edge 1311b and may be perpendicular to the third edge 1311c. The second opening 1312, the third opening 1313, the fourth opening 1314, and the fifth opening 1315 may include substantially the same edges as those of the first opening 1311.

According to an embodiment, a plurality of conductive structures 1370 may be formed in the plurality of openings 1310, respectively. For example, a first conductive structure 1320 may be formed in the first opening 1311, a second conductive structure 1330 may be formed in the second opening 1312, and a third conductive structure 1340 may be formed in the third opening 1313. A fourth conductive structure 1350 may be formed in the fourth opening 1314 and a fifth conductive structure 1360 may be formed in the fifth opening 1315.

According to an embodiment, the first conductive structure 1320 formed in the first opening 1311 may include a plurality of protrusions. For example, the first conductive structure 1320 may include a first protrusion 1321, a second protrusion 1322, a third protrusion 1323, and/or a fourth protrusion 1324. In an embodiment, the plurality of protrusions of the first conductive structure 1320 may be formed in a cuboid shape, respectively. FIG. 13 is a view illustrating the first conductive portion 511 as viewed from a first direction (for example, the -x direction), and hence, the first protrusion 1321, the second protrusion 1322, the third protrusion 1323, and/or the fourth protrusion 1324 are expressed as having a rectangular shape, but substantially, the plurality of protrusions of the first conductive structure 1320 may be formed in a cuboid shape. In an embodiment, the first protrusion 1321, the second protrusion 1322, the third protrusion 1323, and/or the fourth protrusion 1324 may be disposed to be spaced apart from one another by a designated distance.

According to an embodiment, the first conductive structure 1320 may be formed on an edge that is adjacent to the first rear surface cover 261 among the edges of the first opening 1311. For example, the first conductive structure 1320 may be formed on the fourth edge 1311d that is adjacent to the first rear surface cover 261 among the edges of the first opening 1311. In an example, the first protrusion 1321 may be formed on the fourth edge 711d to be positioned at a first corner where the first edge 13 11a and the fourth edge 711d meet each other. The fourth protrusion 1324 may be formed on the fourth edge 1311d to be positioned at a second corner where the third edge 1311c and the fourth edge 1311d meet each other. The second protrusion 1322 and the third protrusion 1323 may be formed on the fourth edge 1311d to be positioned between the first protrusion 1321 and the fourth protrusion 1324.

According to an embodiment, the second conductive structure 1330, the third conductive structure 1340, the fourth conductive structure 1350 and/or the fifth conductive structure 1360 may include a plurality of protrusions. The above explanations of the first protrusion 1321, the second protrusion 1322, the third protrusion 1323, the fourth protrusion 1324, and/or the fifth protrusion 1325 of the first conductive structure 1320 may be applied to the plurality of protrusions of the second conductive structure 1330, the third conductive structure 1340, the fourth conductive structure 1350 and/or the fifth conductive structure 1360. For example, explanations of the positions of the first conductive structure 1320 and the plurality of protrusions formed in the first conductive structure 1320 may be substantially equally applied to the second conductive structure 1330, the third conductive structure 1340, the fourth conductive structure 1350 and/or the fifth conductive structure 1360. For example, explanations of the shape of the plurality of protrusions of the first conductive structure 1320 may be substantially equally applied to the second conductive structure 1330, the third conductive structure 1340, the fourth conductive structure 1350 and/or the fifth conductive structure 1360.

It is illustrated in FIG. 13 that the first opening 1311, the second opening 1312, the third opening 1313, the fourth opening 1314, and/or the fifth opening 1315 are formed in the first conductive portion 511, but the number, shape, and size of the openings formed in the first conductive portion 511 are not limited thereto and the openings may be formed in various numbers, shapes, and sizes.

Table 7 shows antenna gain values of RF signals having horizontal polarization and vertical polarization characteristics according to the number of protrusions included in a plurality of conductive structures when a cumulative probability value in the n261 and n260 bands is 50% of the maximum value. In an embodiment, n261 may refer to a 28 GHz frequency band (for example, about 27.5 to 28.35 GHz). n260 may refer to a 39 GHz frequency band (for example, about 37-40 GHz).

[Table 7]

| Number of protrusions of a conductive structure | n261 (Horizontal) | n261 (Vertical) | n261 (Vertical) | n261 (Horizontal) |
|---|---|---|---|---|
| 2 | 1.7 | -2 | 1 | 1.6 |

(continued)

| Number of protrusions of a conductive structure | n261 (Horizontal) | n261 (Vertical) | n261 (Vertical) | n261 (Horizontal) |
|---|---|---|---|---|
| 3 | 1.9 | -1.7 | 1.2 | 1.3 |
| 4 | 1.9 | -1.5 | 1 | 1.2 |
| 5 | 2 | -1.5 | 1.2 | 1.3 |

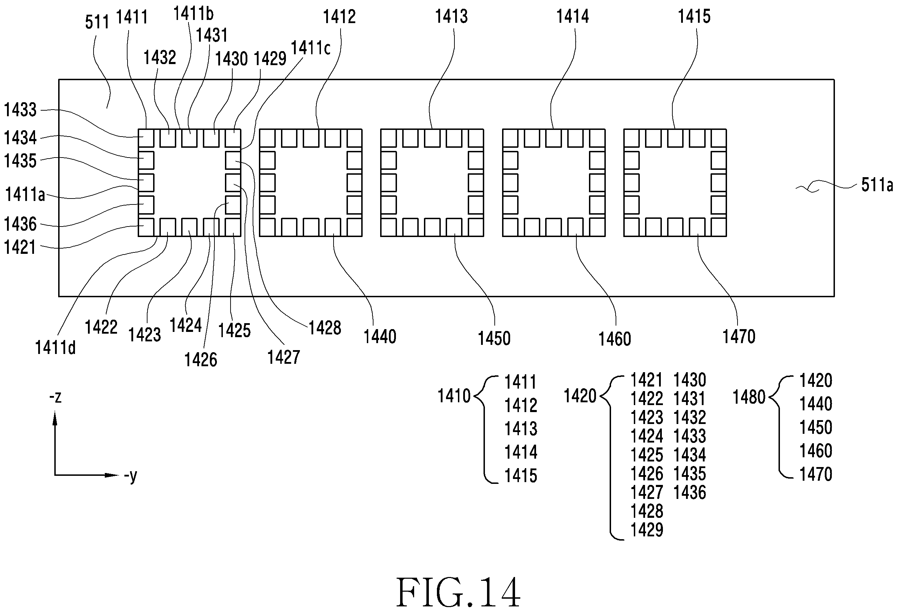

Referring to table 7, when the number of the plurality of protrusions of each of the plurality of conductive structures is 5 according to an embodiment, the antenna gain is relatively higher than when the number of protrusions is 2, 3, and 4. Accordingly, by forming the first conductive structure 720 having 5 protrusions in the first opening 711, the electronic device 101 may obtain a relatively higher antenna gain compared to when a first conductive structure including 2 to 4 protrusions (for example, the first conductive structure 1220 of FIG. 12, the first conductive structure 1320 of FIG. 13) is formed. FIG. 14 is a view for illustrating conductive structures formed in a plurality of openings according to an embodiment.

Referring to FIG. 14, a plurality of openings 1410 may be formed in the first conductive portion 511 of the first housing 211 according to an embodiment.

According to an embodiment, the plurality of openings 1410 may correspond to the first conductive patches 330 of the first antenna module 346, respectively. For example, the first opening 1411 may correspond to the first conductive patch 332, the second opening 1412 may correspond to the second conductive patch 334, and the third opening 1413 may correspond to the third conductive patch 336. The fourth opening 1414 may correspond to the fourth conductive patch 338 and the fifth opening 1415 may correspond to the fifth conductive patch 340.

According to an embodiment, the plurality of openings 1410 may include edges. For example, the first opening 1411 may include a first edge 1411a, a second edge 1411b, a third edge 1411c and/or a fourth edge 1411d. In an example, the second edge 1411b may be perpendicular to the first edge 1411a. The third edge 1411c may be parallel with the first edge 1411a and may be perpendicular to the second edge 1411b. The fourth edge 1411d may be parallel with the second edge 1411b and may be perpendicular to the third edge 1411c. The second opening 1412, the third opening 1413, the fourth opening 1414, and the fifth opening 1415 may include substantially the same edges as those of the first opening 1411.

According to an embodiment, a plurality of conductive structures 1480 may be formed in the plurality of openings 1410, respectively. For example, a first conductive structure 1420 may be formed in the first opening 1411, a second conductive structure 1440 may be formed in the second opening 1412, and a third conductive structure 1450 may be formed in the third opening 1413. A fourth conductive structure 1460 may be formed in the fourth opening 1414 and a fifth conductive structure 1470 may be formed in the fifth opening 1415.

According to an embodiment, the first conductive structure 1420 formed in the first opening 1411 may include a plurality of protrusions. For example, the first conductive structure 1420 may include a first protrusion 1421, a second protrusion 1422, a third protrusion 1423, a fourth protrusion 1424, a fifth protrusion 1425, a sixth protrusion 1426, a seventh protrusion 1427, an eighth protrusion 1428, a ninth protrusion 1429, a tenth protrusion 1430, an eleventh protrusion 1431, a twelfth protrusion 1432, a thirteenth protrusion 1433, a fourteenth protrusion 1434, a fifteenth protrusion 1435, and/or a sixteenth protrusion 1436. In an embodiment, the plurality of protrusions of the first conductive structure 1420 may be formed in a cuboid shape, respectively. FIG. 14 is a view illustrating the first conductive portion 511 as viewed from a first direction (for example, the -x direction), and hence, the plurality of protrusions of the first conductive structure 1420 are expressed as having a rectangular shape, but substantially, the plurality of protrusions of the first conductive structure 1420 may be formed in a cuboid shape. In an embodiment, the plurality of protrusions of the first conductive structure 1420 may be disposed to be spaced apart from one another by a designated distance.

According to an embodiment, the first conductive structure 1420 may be formed over the entire edges of the first opening 1411. For example, the first protrusion 1421 may be formed on the fourth edge 1411d to be positioned at a first corner where the first edge 1411a and the fourth edge 1411d meet each other. The fifth protrusion 1425 may be formed on the fourth edge 1411d to be positioned at a second corner where the third edge 1411c and the fourth edge 1411d meet each other. The second protrusion 1422, the third protrusion 1423, and the fourth protrusion 1424 may be formed on the fourth edge 1411d to be positioned between the first protrusion 1421 and the fifth protrusion 1425.

In an example, the ninth protrusion 1429 may be formed on the third edge 1411c to be positioned at a third corner where the second edge 1411b and the third edge 1411c meet each other. The sixth protrusion 1426, the seventh protrusion 1427, and the eighth protrusion 1428 may be formed on the third edge 1411c to be positioned between the fifth protrusion 1425 and the ninth protrusion 1429.

In an example, the thirteenth protrusion 1433 may be formed on the second edge 1411b to be positioned at a fourth corner where the first edge 1411a and the second edge 1411b meet each other. The tenth protrusion 1430, the eleventh protrusion 1431, and the twelfth protrusion 1432 may be formed on the second edge 1411b to be positioned between the ninth protrusion 1429 and the thirteenth protrusion 1433.

In an example, the fourteenth protrusion 1434, the fifteenth protrusion 1435, and the sixteenth protrusion 1436 may be formed on the first edge 1411a to be positioned between the first protrusion 1421 and the thirteenth protrusion 1433.

According to an embodiment, the second conductive structure 1440, the third conductive structure 1450, the fourth conductive structure 1460 and/or the fifth conductive structure 1470 may include a plurality of protrusions. The above explanations of the plurality of protrusions of the first conductive structure 1420 may be applied to the plurality of protrusions of the second conductive structure 1440, the third conductive structure 1450, the fourth conductive structure 1460 and/or the fifth conductive structure 1470. For example, explanations of the positions of the first conductive structure 1420 and the plurality of protrusions formed in the first conductive structure 1420 may be substantially equally applied to the second conductive structure 1440, the third conductive structure 1450, the fourth conductive structure 1460 and/or the fifth conductive structure 1470. For example, explanations of the shape of the plurality of protrusions of the first conductive structure 1420 may be substantially equally applied to the second conductive structure 1440, the third conductive structure 1450, the fourth conductive structure 1460 and/or the fifth conductive structure 1470.

It is illustrated in FIG. 14 that the first opening 1411, the second opening 1412, the third opening 1413, the fourth opening 1414, and/or the fifth opening 1415 are formed in the first conductive portion 511, but the number, shape, and size of the openings formed in the first conductive portion 511 are not limited thereto and the openings may be formed in various numbers, shapes, and sizes.

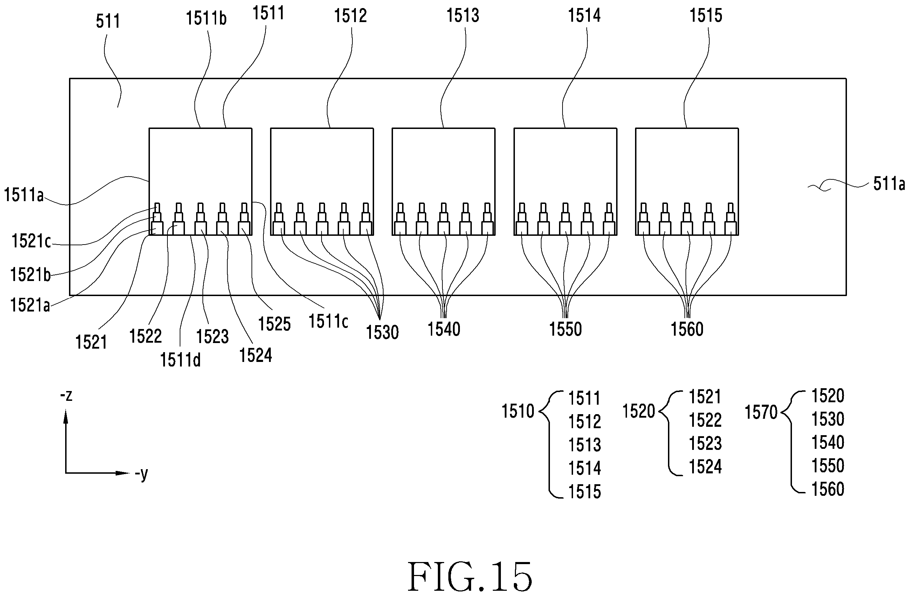

FIG. 15 is a view for illustrating conductive structures formed in a plurality of openings according to an embodiment.

Referring to FIG. 15, a plurality of openings 1510 may be formed in the first conductive portion 511 of the first housing 211 according to an embodiment. For example, a first opening 1511, a second opening 1512, a third opening 1513, a fourth opening 1514, and/or a fifth opening 1515 may be formed in the first conductive portion 511.

According to an embodiment, the plurality of openings 1510 may correspond to the first conductive patches 330 of the first antenna module 346, respectively. For example, the first opening 1511 may correspond to the first conductive patch 332, the second opening 1512 may correspond to the second conductive patch 334, and the third opening 1513 may correspond to the third conductive patch 336. The fourth opening 1514 may correspond to the fourth conductive patch 338 and the fifth opening 1515 may correspond to the fifth conductive patch 340.

According to an embodiment, the plurality of openings 1510 may include edges. For example, the first opening 1511 may include a first edge 1511a, a second edge 1511b, a third edge 1511c and/or a fourth edge 1511d. In an example, the second edge 1511b may be perpendicular to the first edge 1511a. The third edge 1511c may be parallel with the first edge 1511a and may be perpendicular to the second edge 1511b. The fourth edge 1511d may be parallel with the second edge 1511b and may be perpendicular to the third edge 1511c. The second opening 1512, the third opening 1513, the fourth opening 1514, and the fifth opening 1515 may include substantially the same edges as those of the first opening 1511.

According to an embodiment, a plurality of conductive structures 1570 may be formed in the plurality of openings 1510, respectively. For example, a first conductive structure 1520 may be formed in the first opening 1511, a second conductive structure 1530 may be formed in the second opening 1512, and a third conductive structure 1540 may be formed in the third opening 1513. A fourth conductive structure 1550 may be formed in the fourth opening 1514 and a fifth conductive structure 1560 may be formed in the fifth opening 1515.

According to an embodiment, the first conductive structure 1520 formed in the first opening 1511 may include a plurality of protrusions. For example, the first conductive structure 1520 may include a first protrusion 1521, a second protrusion 1522, a third protrusion 1523, a fourth protrusion 1524, and/or a fifth protrusion 1525.

According to an embodiment, each of the plurality of protrusions of the first conductive structure 1520 may have a shape that cuboid-shaped portions are stacked one on another. For example, the first protrusion 1521 may include a first portion 1521a of a cuboid shape, a second portion 1521b formed on the first portion 1521a and having a cuboid shape, and a third portion 1521c formed on the second portion 1521b and having a cuboid shape. In an example, the first portion 1521a may be formed on the fourth edge 1511d of the first opening 1511. The fourth edge 1511d may be an edge that is adjacent to the first rear surface cover 261 among the edges of the first opening 1511. In an example, the first portion 1521a may be larger than the second portion 1521b, and the second portion 1521b may be larger than the third portion 1521c.

For example, like the first protrusion 1521, each of the second protrusion 1522, the third protrusion 1523, the fourth protrusion 1524, and the fifth protrusion 1525 may include a first portion having a cuboid shape, a second portion formed on the first portion and having a cuboid shape, and a third portion formed on the second portion and having a cuboid shape.

According to an embodiment, each of the plurality of protrusions of the first conductive structure 1520 is formed in such a structure that cuboid-shaped portions are stacked one on another, and hence, the structure of the plurality of protrusions of the first conductive structure 1520 may be referred to as a stacked structure. In another example, each of the plurality of protrusions of the first conductive structure 1520 is formed of cuboid-shaped portions which are stacked one on another and gradually shrink from bottom to top, and hence, the structure of the plurality of protrusions of the first conductive structure 1520 may be referred to as a triangular structure.

According to an embodiment, the first protrusion 1521, the second protrusion 1522, the third protrusion 1523, the fourth protrusion 1524, and/or the fifth protrusion 1525 may be disposed to be spaced apart from one another by a designated distance.

According to an embodiment, the first conductive structure 1520 may be formed on an edge that is adjacent to the first rear surface cover 261 among the edges of the first opening 1511. For example, the first conductive structure 1520 may be formed on the fourth edge 1511d that is adjacent to the first rear surface cover 261 among the edges of the first opening 1511. In an example, the first protrusion 1521 may be formed on the fourth edge 1511d to be positioned at a first corner where the first edge 153 11a and the fourth edge 1511d meet each other. The fifth protrusion 1525 may be formed on the fourth edge 1511d to be positioned at a second corner where the third edge 1511c and the fourth edge 1511d meet each other. The second protrusion 1522, the third protrusion 1523, and the fourth protrusion 1524 may be formed on the fourth edge 1511d to be positioned between the first protrusion 1521 and the fifth protrusion 1525.

According to an embodiment, the second conductive structure 1530, the third conductive structure 1540, the fourth conductive structure 1550 and/or the fifth conductive structure 1560 may include a plurality of protrusions. The above explanations of the first protrusion 1521, the second protrusion 1522, the third protrusion 1523, the fourth protrusion 1524, and/or the fifth protrusion 1525 of the first conductive structure 1520 may be applied to the plurality of protrusions of the second conductive structure 1530, the third conductive structure 1540, the fourth conductive structure 1550 and/or the fifth conductive structure 1560. For example, explanations of the positions of the first conductive structure 1520 and the plurality of protrusions formed in the first conductive structure 1520 may be substantially equally applied to the second conductive structure 1530, the third conductive structure 1540, the fourth conductive structure 1550 and/or the fifth conductive structure 1560. For example, explanations of the shape of the plurality of protrusions of the first conductive structure 1520 may be substantially equally applied to the second conductive structure 1530, the third conductive structure 1540, the fourth conductive structure 1550 and/or the fifth conductive structure 1560.

It is illustrated in FIG. 15 that the first opening 1511, the second opening 1512, the third opening 1513, the fourth opening 1514, and/or the fifth opening 1515 are formed in the first conductive portion 511, but the number, shape, and size of the openings formed in the first conductive portion 511 are not limited thereto and the openings may be formed in various numbers, shapes, and sizes.

Table 8 shows antenna gain values of RF signals having horizontal polarization and vertical polarization characteristics according to arrangements or shapes of a plurality of conductive structures when a cumulative probability value in the n261 band is 50% of the maximum value. In an embodiment, n261 may refer to a 28 GHz frequency band (for example, about 27.5 to 28.35 GHz). For example, LOW of the n261 band may be referred to as about 27.5 GHz band, MID may be referred to as about 28 GHz band, and HIGH may be referred to as about 28.35 GHz band.

[Table 8]

| Arrangements or shapes of the plurality of conductive structures | n261 (LOW) (Horizontal) | n261 (LOW) (Vertical) | n261 (MID) (Horizontal) | n261 (MID) (Vertical) | n261 (HIGH) (Horizontal) | n261 (HIGH) (Vertical) |
|---|---|---|---|---|---|---|
| The plurality of conductive structures 770 | 1.7 | -1.2 | 2 | -1.4 | 1.8 | -0.8 |
| The plurality of conductive structures 1480 | 1.8 | -1.6 | 2 | -1.5 | 1.9 | -0.8 |
| The plurality of conductive structures 1570 | 2 | -0.9 | 2.1 | -0.4 | 1.7 | 0.7 |

Referring to table 8, by using the plurality of conductive structures 1480 of FIG. 14 and/or the plurality of conductive structures 1570 of FIG. 15, the electronic device 101 according to an embodiment may obtain substantially the same antenna gain as or a higher antenna gain than that obtained when the plurality of conductive structures 1670 of FIG. 7 are used. For example, by using the plurality of conductive structures 770 of FIG. 7 under the LOW and horizontal polarization condition of the n261 band, the electronic device 101 may obtain a 2 dB antenna gain. By using the plurality of conductive structures 1480 of FIG. 14 and/or the plurality of conductive structures 1570 of FIG. 15 under the LOW and horizontal polarization condition of the n261 band, the electronic device 101 may obtain a 2 dB antenna gain and a 2.1 dB antenna gain, respectively. Table 9 shows antenna gain values of RF signals having horizontal polarization and vertical polarization characteristics according to arrangements or shapes of a plurality of conductive structures when a cumulative probability value in the n260 band is 50% of the maximum value. In an embodiment, n260 may refer to a 39 GHz frequency band (for example, about 37 to 40 GHz). For example, LOW of the n260 band may be referred to as about 37 GHz band, MID may be referred to as about 38.5 GHz band, and HIGH may be referred to as about 40 GHz band.

[Table 9]

| Arrangements or shapes of the plurality of conductive structures | n260 (LOW) (Horizontal) | n260 (LOW) (Vertical) | n260 (MID) (Horizontal) | n260 (MID) (Vertical) | n260 (HIGH) (Horizontal) | n260 (HIGH) (Vertical) |
|---|---|---|---|---|---|---|
| The plurality | 2.1 | 1.5 | 1.3 | 1.2 | 0.6 | 1.2 |
| of conductive structures 770 | | | | | | |
| The plurality of conductive structures 1480 | 0 | 0.9 | 0.7 | 0.8 | 1.1 | 0.7 |
| The plurality of conductive structures 1570 | 1.4 | 1.4 | 0.7 | 0.2 | 1.1 | -0.8 |

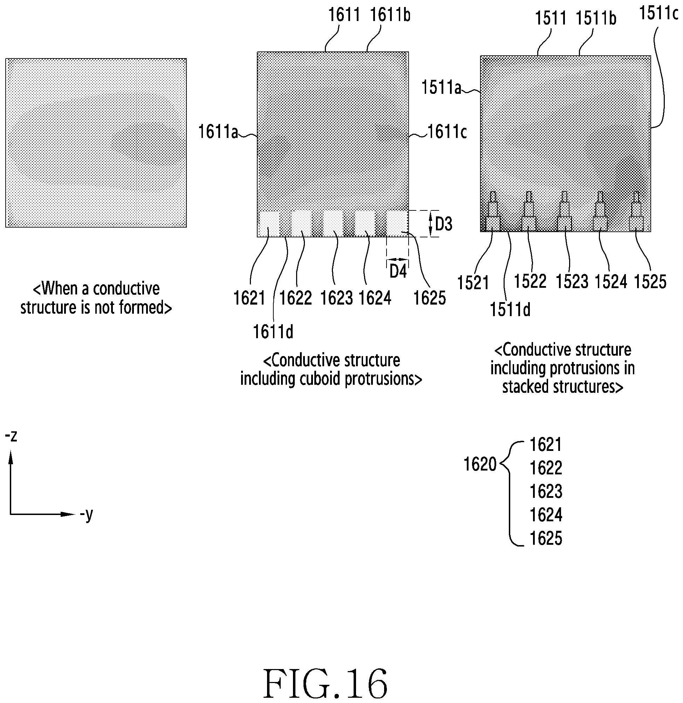

Referring to table 9, by using the plurality of conductive structures 1480 of FIG. 14 and/or the plurality of conductive structures 1570 of FIG. 15, the electronic device 101 according to an embodiment may obtain substantially the same antenna gain as or a higher antenna gain than that obtained when the plurality of conductive structures 1670 of FIG. 7 are used. For example, by using the plurality of conductive structures 770 of FIG. 7 under the HIGH and horizontal polarization condition of the n260 band, the electronic device 101 may obtain a 0.6 dB antenna gain. By using the plurality of conductive structures 1480 of FIG. 14 and/or the plurality of conductive structures 1570 of FIG. 15 under the LOW and horizontal polarization condition of the n261 band, the electronic device 101 may obtain a 1.1 dB antenna gain and a 1.1 dB antenna gain, respectively. FIG. 16 is a view for comparing a radiation pattern when a conductive structure is not formed in the first opening, a radiation pattern when a conductive structure including a cuboid protrusion is formed in the first opening, and a radiation pattern when a conductive structure including a protrusion in a stacked structure is formed in the first opening according to an embodiment.

Referring to FIG. 16, a first opening 1611 may be formed in the first conductive portion 511 of the first housing 211. The first opening 1611 may correspond to the first opening 711 of FIG. 7. The first opening 1611 may include a first edge 1611a, a second edge 1611b, a third edge 1611c, and a fourth edge 1611d.

According to an embodiment, a first conductive structure 1620 may be formed on the fourth edge 1611d which is an edge adjacent to the first rear surface cover 261. The first conductive structure 1620 may include a first protrusion 1621, a second protrusion 1622, a third protrusion 1623, a fourth protrusion 1624, and a fifth protrusion 1625.

According to an embodiment, each of the plurality of protrusions of the first conductive structure 1620 may have a designated height and a designated width. For example, the first protrusion 1621 may have a second height D3 (for example, 0.8 mm) in a third direction (for example, the -z direction), and the first protrusion 1621 may have a second width D4 (for example, 0.3 mm) in a fourth direction (for example, the -y direction). For example, the second protrusion 722, the third protrusion 723, the fourth protrusion 724 and/or the fifth protrusion 1625 may have the second height D3 in the third direction (for example, the -z direction), and may have the second width D4 in the fourth direction (for example, the -y direction).

According to an embodiment, the height and the width of the plurality of protrusions of the first conductive structure 1620 shown in FIG. 16 may be different from the height and the width of the plurality of protrusions of the first conductive structure 720 shown in FIG. 7. For example, the second height D3 (for example, 0.8 mm) of the first protrusion 1621 may be higher than the first height D1 (for example, 0.5 mm) of the first protrusion 721. The second width D4 (for example, 0.3 mm) of the first protrusion 1621 may be smaller than the first width D2 (for example, 0.5 mm) of the first protrusion 721. For example, the second height D3 of the second protrusion 1622, the third protrusion 1623, the fourth protrusion 1624 and/or the fifth protrusion 1624 may be higher than the first height D1 of the second protrusion 722, the third protrusion 723, the fourth protrusion 724 and/or the fifth protrusion 725. The second width D4 of the second protrusion 722, the third protrusion 723, the fourth protrusion 724 and/or the fifth protrusion 725 may be smaller than the first width D2 of the second protrusion 722, the third protrusion 723, the fourth protrusion 724 and/or the fifth protrusion 725.

According to an embodiment, when the first radiation pattern when a conductive structure is not formed and the second radiation pattern when the conductive structure including the cuboid protrusion is formed are compared, the second radiation pattern has an additional pattern compared to the first radiation pattern. Accordingly, by forming the conductive structure (for example, the first conductive structure 1620) including the cuboid protrusion in the plurality of openings (for example, the first opening 1611), the electronic device 101 may obtain an additional antenna coverage.

According to an embodiment, when the first radiation pattern when a conductive structure is not formed and the third radiation pattern when the conductive structure including the protrusion in the stacked structure are compared, the third radiation pattern has an additional pattern compared to the first radiation pattern. Accordingly, by forming the conductive structure (for example, the first conductive structure 1520) including the protrusion in the stacked structure in the plurality of openings (for example, the first opening 1511), the electronic device 101 may obtain an additional antenna coverage.

Table 10 shows antenna gain values of RF signals having horizontal polarization and vertical polarization characteristics according to the number of protrusions included in a plurality of conductive structures when a cumulative probability value in the n261 band and the n260 band is 50% of the maximum value. In an embodiment, the n261 may refer to a 28 GHz frequency band (for example, about 27.5 to 28.35 GHz). The n260 may refer to a 39 GHz frequency band (for example, about 37 to 40 GHz).

[Table 10]

| Shape of the conductive structure | n261 (Horizontal) | n261 (Vertical) | n261_(Vertical) | n261 (Horizontal) |
|---|---|---|---|---|
| First conductive structure 720 | 2 | -1.4 | 1.3 | 1.2 |
| First conductive structure 1520 | 2.1 | -0.4 | 0.7 | 0.2 |
| First conductive structure 1620 | 2.1 | -1.2 | 1 | 0.9 |

Referring to table 10, when a conductive structure (for example, the first conductive structure 720, the first conductive structure 1520, the first conductive structure 1620) is used, the electronic device 101 according to an embodiment may obtain a higher antenna gain in the n260 band than in the n261 band. For example, the electronic device 101 may obtain a 2 dB antenna gain in the n261 band by using the first conductive structure 720 of FIG. 7. The electronic device 101 may obtain a 1.3 or 1.2 dB antenna gain in the n260 band by using the first conductive structure 720 of FIG. 7. According to an embodiment, the electronic device may further include a rear surface cover forming the rear surface of the electronic device. The first opening may include a first edge which is adjacent to the rear surface cover, a second edge which is opposite to the first edge, and a third edge which connects the first edge and the second edge. The first conductive structure may be formed on the third edge.

According to an embodiment, the at least one dielectric material may be disposed in the first opening and may form at least a part of the side surface of the electronic device along with the first housing.

According to an embodiment, the electronic device may further include a second housing and a hinge structure which connects the first housing and the second housing such that the second housing rotates with respect to the first housing.

According to an embodiment, as the wireless communication circuit feeds power to the plurality of conductive patches, a first RF signal of a first frequency band may be radiated from the plurality of conductive patches. The first electrical path may be formed in the first conductive structure based on the first RF signal radiated from the plurality of conductive patches.

According to an embodiment, a frequency band of the RF signal generated based on the first electrical path and a frequency band of the first RF signal radiated from the plurality of conductive patches may be included in a designated frequency band.

According to an embodiment, the length of the first electrical length may be 1/2 of a length of a wavelength corresponding to the frequency band of the RF signal.

According to various embodiments of the disclosure, the electronic device may obtain an additional antenna coverage through conductive structures including a plurality of protrusions formed in each of the plurality of openings.

In addition, various effects that are directly or indirectly understood through the disclosure may be provided.

According to various embodiments of the disclosure, an electronic device may include a first housing which forms at least a part of a side surface of the electronic device, a first conductive structure which is formed inside the first opening; and an antenna module including a printed circuit board (PCB), a plurality of conductive patches disposed on the PCB to face the first opening; and a wireless communication circuit. A first opening may be formed in the first housing. As the wireless communication circuit feeds power to the plurality of conductive patches, a first electrical path may be formed in the first conductive structure which is spaced apart from the plurality of conductive patches. A radio frequency (RF) signal generated based on the first electrical path may be radiated to an outside of the electronic device.

According to an embodiment, the first conductive structure may include first protrusions. Each of the first protrusions may have a cuboid shape.

According to an embodiment, the first conductive structure may include first protrusions. Each of the first protrusions may include a first portion which has a cuboid shape, a second portion which is formed on the first portion and has a cuboid shape, and a third portion which is formed on the second portion and has a cuboid shape. The first portion may be larger than the second portion, and the second portion may be larger than the third portion.

According to an embodiment, the electronic device may further include a rear surface cover forming a rear surface of the electronic device. The first opening may include a first edge which is adjacent to the rear surface cover. The first conductive structure may be formed on the first edge.

According to an embodiment, the electronic device may further include a rear surface cover forming a rear surface of the electronic device. The RF signal generated based on the first electrical path of the first conductive structure may be radiated toward the rear surface of the electronic device.

According to an embodiment, at least one dielectric material may be disposed in the first opening and between the first opening and the antenna module.

According to an embodiment, as the wireless communication circuit feeds power to the plurality of conductive patches, a first RF signal may be radiated toward the first opening. A second RF signal may be radiated based on the first electrical path which is formed in the first conductive structure by the first RF signal.

According to an embodiment, the first opening may include a first edge, a second edge which is perpendicular to the first edge, a third edge which is perpendicular to the second edge and is parallel with the first edge, and a fourth edge which is perpendicular to the third edge and is parallel with the second edge. The first conductive structure may be formed along the first edge, the second edge, the third edge, and the fourth edge.

According to an embodiment, the first opening may include a first edge, a second edge which is perpendicular to the first edge, a third edge which is perpendicular to the second edge and is parallel with the first edge, and a fourth edge which is perpendicular to the third edge and is parallel with the second edge. The first conductive structure may include a first protrusion, a second protrusion, a third protrusion, a fourth protrusion, and a fifth protrusion. The first protrusion may be formed at a first corer which is formed by the first edge and the second edge. The fifth protrusion may be formed at a second corner which is formed by the first edge and the fourth edge. The second protrusion, the third protrusion, and the fourth protrusion may be formed on the first edge to be positioned between the first protrusion and the fifth protrusion.

According to various embodiments of the disclosure, an electronic device may include a first housing which forms at least a part of a side surface of the electronic device, conductive structures which are formed on inner surfaces of the plurality of openings, a PCB, a plurality of conductive patches disposed on the PCB to face the plurality of openings, and a wireless communication circuit. The plurality of openings may be formed in the first housing. As the wireless communication circuit feeds power to the plurality of conductive patches, electrical paths may be formed in the plurality of conductive structures which are spaced apart from the plurality of conductive patches. A radio frequency (RF) signal generated based on the electrical paths may be radiated.

## Claims

1. An electronic device comprising:

   a first housing forming at least a part of a side surface of the electronic device, the first housing in which a first opening is formed;
   a first conductive structure formed inside the first opening; and
   an antenna module,
   wherein the antenna module comprises:

   a printed circuit board (PCB),
   a plurality of conductive patches disposed on the PCB to face the first opening, and
   a wireless communication circuit,
   wherein, as the wireless communication circuit feeds power to the plurality of conductive patches, a first electrical path is formed in the first conductive structure which is spaced apart from the plurality of conductive patches, and
   wherein a radio frequency (RF) signal generated based on the first electrical path is radiated to an outside of the electronic device.

2. The electronic device of claim 1, wherein the first conductive structure comprises first protrusions, and wherein each of the first protrusions has a cuboid shape.

3. The electronic device of claim 1, wherein the first conductive structure comprises first protrusions, and wherein each of the first protrusions comprises:

   a first portion having a cuboid shape,
   a second portion formed on the first portion and having a cuboid shape, and
   a third portion formed on the second portion and having a cuboid shape, and
   wherein the first portion is larger than the second portion, and the second portion is larger than the third portion.

4. The electronic device of claim 1, further comprising:

> a rear surface cover forming a rear surface of the electronic device,
> wherein the first opening comprises a first edge which is adjacent to the rear surface cover,
> wherein the first conductive structure is formed on the first edge.

5. The electronic device of claim 1, further comprising:

> a rear surface cover forming a rear surface of the electronic device,
> wherein the first opening comprises a first edge which is adjacent to the rear surface cover, a second edge which is opposite to the first edge, and a third edge connecting the first edge and the second edge, and
> wherein the first conductive structure is formed on the third edge.

6. The electronic device of claim 1, further comprising:

> a rear surface cover forming a rear surface of the electronic device,
> wherein the RF signal generated based on the first electrical path of the first conductive structure is radiated toward the rear surface of the electronic device.

7. The electronic device of claim 1, wherein at least one dielectric material is disposed in the first opening and between the first opening and the antenna module.

8. The electronic device of claim 7, wherein the at least one dielectric material is disposed in the first opening and forms at least a part of the side surface of the electronic device along with the first housing.

9. The electronic device of claim 1, wherein, as the wireless communication circuit feeds power to the plurality of conductive patches, a first RF signal is radiated toward the first opening, and
wherein a second RF signal is radiated based on the first electrical path formed in the first conductive structure by the first RF signal.

10. The electronic device of claim 1, wherein the first opening comprises a first edge, a second edge which is perpendicular to the first edge, a third edge which is perpendicular to the second edge and is parallel with the first edge, and a fourth edge which is perpendicular to the third edge and is parallel with the second edge, and
wherein the first conductive structure is formed along the first edge, the second edge, the third edge, and the fourth edge.

11. The electronic device of claim 1, wherein the first opening comprises a first edge, a second edge which is perpendicular to the first edge, a third edge which is perpendicular to the second edge and is parallel with the first edge, and a fourth edge which is perpendicular to the third edge and is parallel with the second edge,

> wherein the first conductive structure comprises a first protrusion, a second protrusion, a third protrusion, a fourth protrusion, and a fifth protrusion,
> wherein the first protrusion is formed at a first corer which is formed by the first edge and the second edge,
> wherein the fifth protrusion is formed at a second corner which is formed by the first edge and the fourth edge, and
> wherein the second protrusion, the third protrusion, and the fourth protrusion are formed on the first edge to be positioned between the first protrusion and the fifth protrusion.

12. The electronic device of claim 1, further comprising:

> a second housing; and
> a hinge structure connecting the first housing and the second housing such that the second housing rotates with respect to the first housing.

13. The electronic device of claim 1, wherein, as the wireless communication circuits feeds power to the plurality of conductive patches, a first RF signal of a first frequency band is radiated from the plurality of conductive patches, and
wherein the first electrical path is formed in the first conductive structure, based on the first RF signal radiated from the plurality of conductive patches.

14. The electronic device of claim 13, wherein a frequency band of the RF signal generated based on the first electrical path, and a frequency band of the first RF signal radiated from the plurality of conductive patches are included in a designated frequency band.

15. The electronic device of claim 1, wherein a length of the first electrical path is 1/2 of a length of a wavelength corresponding to a frequency band of the RF signal.

FIG.1

221

211

First Axis

222

212

+y
-z
+x
-x
+z
-y

<Front View>

251

250

261

211a

211

First Axis

211b

202

212

+y
+z
-x
+x
-y
-z

<Rear View>

260 { 261 / 262

220 { 221 / 222

210 { 211 / 212

FIG.2

EP 4 539 250 A1

First Surface

346

330

332    334    336    338    340

411

454    452    490    412    410

Second Surface

FIG.3

FIG.4

FIG.5

< Perspective View >

< Rear View >

FIG.6A

221

511a    670

511

-z

-y

+x

# FIG.6B

FIG.6C

FIG.7

EP 4 539 250 A1

FIG.8

911

930

921   922   923   924   925

920 { 921
      922
      923
      924
      925

<When a conductive structure is not formed>

<When conductive structures are formed>

-z

-y

# FIG.9

FIG.10

EP 4 539 250 A1

FIG.11

FIG.12

EP 4 539 250 A1

FIG.13

EP 4 539 250 A1

FIG.14

FIG.15

1611 1611b

1511 1511b 1511c

1511a

1611a 1611c

D3

D4

1611d

1521 1522 1523 1524 1525

1511d

1621 1622 1623 1624 1625

<When a conductive
structure is not formed>

<Conductive structure
including cuboid protrusions>

<Conductive structure
including protrusions in
stacked structures>

-z

-y

$$1620 \begin{cases} 1621 \\ 1622 \\ 1623 \\ 1624 \\ 1625 \end{cases}$$

# FIG.16

<table>
<tr><td colspan="2" align="center"><b>INTERNATIONAL SEARCH REPORT</b></td><td colspan="2">International application No.<br><br><b>PCT/KR2023/008195</b></td></tr>
</table>

**A.    CLASSIFICATION OF SUBJECT MATTER**

**H01Q 1/38**(2006.01)i; **H01Q 1/24**(2006.01)i; **H04M 1/02**(2006.01)i; **H01Q 9/04**(2006.01)i

According to International Patent Classification (IPC) or to both national classification and IPC

**B.    FIELDS SEARCHED**

Minimum documentation searched (classification system followed by classification symbols)

H01Q 1/38(2006.01); H01Q 13/10(2006.01); H01Q 21/06(2006.01); H01Q 21/24(2006.01); H01Q 9/04(2006.01); H04B 1/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 하우징(housing), 개구(opening), 도전성 구조(conductive structure), 패치(patch), PCB

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2020-0057962 A (SAMSUNG ELECTRONICS CO., LTD.) 27 May 2020 (2020-05-27)<br>    See paragraphs [0080]-[0121] and [0180] and figures 4a-24b. | 1-15 |
| Y | KR 10-2021-0048342 A (SAMSUNG ELECTRONICS CO., LTD.) 03 May 2021 (2021-05-03)<br>    See paragraphs [0120]-[0167] and figures 8-13c. | 1-15 |
| Y | KR 10-2022-0005822 A (SAMSUNG ELECTRONICS CO., LTD.) 14 January 2022 (2022-01-14)<br>    See paragraph [0157] and figures 11a-11d. | 12 |
| A | KR 10-2021-0100738 A (HUAWEI TECHNOLOGIES CO., LTD.) 17 August 2021 (2021-08-17)<br>    See claims 1-17 and figures 1a-9. | 1-15 |
| A | KR 10-2020-0084617 A (SAMSUNG ELECTRONICS CO., LTD. et al.) 13 July 2020 (2020-07-13)<br>    See claims 1-20 and figures 3a-16. | 1-15 |

☐ Further documents are listed in the continuation of Box C.          ☑ See patent family annex.

\*    Special categories of cited documents:
"A"    document defining the general state of the art which is not considered to be of particular relevance
"D"    document cited by the applicant in the international application
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
|---|---|
| **21 September 2023** | **21 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/008195**

| Patent document cited in search report | | | Publication date (day/month/year) | Patent family member(s) | | | Publication date (day/month/year) |
|---|---|---|---|---|---|---|---|
| KR | 10-2020-0057962 | A | 27 May 2020 | CN | 113330727 | A | 31 August 2021 |
| | | | | EP | 3864829 | A1 | 18 August 2021 |
| | | | | EP | 3864829 | A4 | 24 November 2021 |
| | | | | KR | 10-2572820 | B1 | 30 August 2023 |
| | | | | US | 11202365 | B2 | 14 December 2021 |
| | | | | US | 11533815 | B2 | 20 December 2022 |
| | | | | US | 11729930 | B2 | 15 August 2023 |
| | | | | US | 2020-0163204 | A1 | 21 May 2020 |
| | | | | US | 2021-0400802 | A1 | 23 December 2021 |
| | | | | US | 2023-0122983 | A1 | 20 April 2023 |
| | | | | WO | 2020-105987 | A1 | 28 May 2020 |
| KR | 10-2021-0048342 | A | 03 May 2021 | CN | 112701446 | A | 23 April 2021 |
| | | | | EP | 3813193 | A1 | 28 April 2021 |
| | | | | US | 11367946 | B2 | 21 June 2022 |
| | | | | US | 2021-0126344 | A1 | 29 April 2021 |
| | | | | WO | 2021-080241 | A1 | 29 April 2021 |
| KR | 10-2022-0005822 | A | 14 January 2022 | EP | 4164061 | A1 | 12 April 2023 |
| | | | | US | 2023-0145636 | A1 | 11 May 2023 |
| | | | | WO | 2022-010100 | A1 | 13 January 2022 |
| KR | 10-2021-0100738 | A | 17 August 2021 | AU | 2019-426399 | A1 | 05 August 2021 |
| | | | | AU | 2019-426399 | B2 | 11 August 2022 |
| | | | | CA | 3126365 | A1 | 06 August 2020 |
| | | | | CN | 113196565 | A | 30 July 2021 |
| | | | | EP | 3891842 | A1 | 13 October 2021 |
| | | | | JP | 2022-519059 | A | 18 March 2022 |
| | | | | JP | 7256276 | B2 | 11 April 2023 |
| | | | | KR | 10-2468914 | B1 | 18 November 2022 |
| | | | | US | 2022-0102874 | A1 | 31 March 2022 |
| | | | | WO | 2020-156650 | A1 | 06 August 2020 |
| KR | 10-2020-0084617 | A | 13 July 2020 | WO | 2020-141692 | A1 | 09 July 2020 |

Form PCT/ISA/210 (patent family annex) (July 2022)